# EUROPEAN PATENT APPLICATION

(11) **EP 4 694 330 A1**
(43) Date of publication of application: **11.02.2026**
(21) Application number: 24783995.4
(22) Date of filing: 04.03.2024
(51) Int. Cl.: H04W 36/00

(54) **COMMUNICATION METHOD AND APPARATUS, AND TERMINAL DEVICE**

(30) Priority: 07.04.2023 CN 202310371155
(71) Applicant: Datang Mobile Communications Equipment Co., Ltd., Beijing 100085 (CN)
(72) Inventor: ZHAO, Xiaoxue, Beijing 100085 (CN); HOU, Yunjing, Beijing 100085 (CN); WANG, Baixiao, Beijing 100085 (CN)
(74) Representative: Studio Torta S.p.A.
(86) International application number: PCT/CN2024/079953
(87) International publication number: WO 2024/207910

(57) **Abstract**

The present disclosure provides a communication method and apparatus, and a terminal device, including: in a case where the terminal device moves from a first network to a second network, not releasing, by the terminal device, a location context and skipping cancelling a location request, where through skipping cancelling the location request, the terminal device is caused to continue to monitor whether a request is triggered or a periodic event occurs, which enables the terminal device to report the location context in a case where it is monitored that the request is triggered or the periodic event occurs, thereby determining location information of the terminal device.

## Description

This application claims priority to Chinese Patent Application No. 202310371155.5, filed with the China National Intellectual Property Administration on April 7, 2023 and entitled "COMMUNICATION METHOD AND APPARATUS, AND TERMINAL DEVICE", which is incorporated herein by reference in its entirety.

### TECHNICAL FIELD

The present disclosure relates to the field of communication technologies, and in particular, to a communication method and apparatus, and a terminal device.

### BACKGROUND

A terminal device can move between different networks, for example, the terminal device can move from a first network to a second network.

In the related art, in a case of moving between different networks, the terminal device needs to initiate cancellation of location request. As a result, the terminal device is unable to monitor a trigger of a request or a periodic event, and cannot report a location context, resulting in a drawback of low reliability for the terminal device to move between different networks.

### SUMMARY

The present disclosure provides a communication method and apparatus, and a terminal device, to avoid the problem of low reliability for the terminal device to move between different networks.

In a first aspect, the present disclosure provides a communication method, applied to a terminal device and including:
in a case where the terminal device moves from a first network to a second network, not releasing, by the terminal device, a location context and skipping cancelling a location request.

Here, the terminal device not releasing the location context can be understood as the terminal device storing the location context rather than deleting it. Skipping cancelling the location request can be understood as sustaining to make the location request.

Exemplarily, in the related art, in a case where the terminal device moves from the first network to the second network, the terminal device deletes the location context and cancel the location request. However, in this embodiment, the terminal device does not release the location context and continues to perform the location request and skips cancelling the location request, so that the terminal device can continue to monitor whether a request is triggered or a periodic event occurs, which enables the terminal device to report the location context in a case where it is monitored that the request is triggered or the periodic event occurs, thereby determining location information of the terminal device, and thus achieving the reliability and effectiveness of the movement of the terminal device between different networks.

In some embodiments, the method further includes:
in a case where a process of the location request ends, or, in a case where an event reporting phase of an interworking IWK network corresponding to the location request ends, deleting the location context stored in the terminal device.

In the embodiment, the problem since the location context cannot be maintained can be avoided by removing the location context.

In some embodiments, the method further includes:
in a case where the terminal device detects an event report of an interworking IWK network, initiating, by the terminal, a process of location request to obtain location information of the terminal device; and
adding the location information to the event report.

In the embodiment, it is realized that the network knows the location of the terminal device by adding the location information to the event report.

In some embodiments, the method further includes:
sending an event report of an interworking IWK network;
where the event report includes at least one of the following: an indication that location information of the terminal device is requested, or a location parameter of the terminal device.

In the embodiment, the location of the terminal device can be determined by combining the indication that the location information is requested and the location parameter.

In a second aspect, the present disclosure provides a communication method, the method is applied to a location management function LMF, where the LMF stores a location context of a terminal device, and the method includes:
processing the location context in a preset case, where the preset case includes at least one of the following:
receiving a notification of an interworking IWK event;
receiving an event report of an IWK network; or
a waiting duration of the LMF reaching a preset duration.

In the embodiment, the flexibility and diversity of processing of the location context can be achieved by combining the preset request to process the location context.

In some embodiments, the processing the location context in the preset case includes one of the following:
deleting or updating the location context in a case where the notification of the IWK event is received;
deleting the location context in a case where the notification of the IWK event is received and the waiting duration of the LMF reaches the preset duration;
deleting the location context in a case where the notification of the IWK event is received, the waiting duration of the LMF reaches the preset duration, and the event report is not received in the preset duration;
deleting the location context in a case where the waiting duration of the LMF reaches the preset duration; or
deleting or updating the location context in a case where the event report is received.

In some embodiments, the method further includes one of the following:
receiving the IWK event notification sent by a gateway mobile location center GMLC of a second network;
receiving the IWK event notification sent by a unified data management UDM; or
receiving the event report sent by the gateway mobile location center GMLC of the second network.

In the embodiment, flexibility and diversity in obtaining the IWK event notification and the event report can be achieved.

In some embodiments, before the receiving the IWK event notification sent by the unified data management UDM, the method further includes:
subscribing to the notification of the IWK event from the UDM.

In a third aspect, the present disclosure provides a communication method, applied to a network element of a first network, where a terminal device moves from the first network to a second network, and the method includes:
sending a gateway mobile location center GMLC address of the first network and a GMLC address of the second network to the terminal device.

In the embodiment, the GMLC address can be obtained comprehensively by the terminal device.

In some embodiments, the sending the gateway mobile location center GMLC address of the first network and the GMLC address of the second network to the terminal device includes:
sending the GMLC address of the first network and the GMLC address of the second network to the terminal device in a case where the terminal device has a IWK capability.

In the embodiment, the effectiveness and reliability of the terminal device to obtain the GMLC address can be improved by incorporating the IWK capability.

In some embodiments, the network element of the first network is a mobility management entity MME or an access and mobility management function AMF.

In some embodiments, the GMLC address of the first network and the GMLC address of the second network are queried and obtained by the MME or the AMF through a network repository function NRF; or,
the GMLC address of the first network and the GMLC address of the second network are obtained by the MME or the AMF from a GMLC of the second network.

In the embodiment, the diversity and flexibility of obtaining the GMLC addresses can be achieved.

In a fourth aspect, the present disclosure provides a communication method, applied to a core network element and including:
in a case where a terminal device moves from a first network to a second network and receives a first message, initiating positioning of the terminal device to obtain location information, where the first message is used to request for obtaining the location information of the terminal device; and
sending the location information for the first message.

In the embodiment, missing location information in an event report can be avoided by determining and feed backing the location information for the first message.

In some embodiments, the first message includes one of the following:
a first request requiring to provide the location information of the terminal device; or
an indication that the location information of the terminal device is requested in an event report of an interworking IWK network.

In some embodiments, the first message includes the first request, the core network element includes a gateway mobile location center GMLC of the second network, where before the initiating the positioning of the terminal device, the method further includes:
receiving the first request sent by a GMLC of the first network.

In some embodiments, the first request includes a first location parameter which is applicable to the first network, where the initiating the positioning of the terminal device to obtain the location information includes:
mapping the first location parameter to be a second location parameter which is applicable to the second network; and
initiating a mobile terminated location request MT-LR process according to the second location parameter to obtain the location information;
where the sending the location information for the first message includes: sending the location information to the GMLC of the first network.

In a fifth aspect, the present disclosure provides a communication method, applied to a gateway mobile location center GMLC and including:
in a case where an event report of an interworking IWK network is received, sending a first request requiring to provide location information of a terminal device; and
receiving the location information for the first message.

In some embodiments, the event report may include at least one of the following: an indication that the location information of the terminal device is requested, or a location parameter of the terminal device.

In a sixth aspect, the present disclosure provides a terminal device, including a memory, a transceiver, and a processor:
where the memory is configured to store a computer program; the transceiver is configured to send and receive data under a control of the processor; the processor is configured to read the computer program in the memory and perform the following operations:
in a case where the terminal device moves from a first network to a second network, not releasing, by the terminal device, a location context and skipping cancelling a location request.

In some embodiments, the processor is further configured to perform the following operations:
in a case where a process of the location request ends, or, in a case where an event reporting phase of an interworking IWK network corresponding to the location request ends, deleting the location context stored in the terminal device.

In some embodiments, the processor is further configured to perform the following operations:
in a case where the terminal device detects an event report of an interworking IWK network, initiating, by the terminal, a process of location request to obtain location information of the terminal device; and
adding the location information to the event report.

In some embodiments, the processor is further configured to perform the following operations:
sending an event report of an interworking IWK network;
where the event report includes at least one of the following: an indication that location information of the terminal device is requested, or a location parameter of the terminal device.

In a seventh aspect, the present disclosure provides a location management function, where the location management function LMF stores a location context of a terminal device, the LMF includes a memory, a transceiver, and a processor:
where the memory is configured to store a computer program; the transceiver is configured to send and receive data under a control of the processor; the processor is configured to read the computer program in the memory and perform the following operations:
processing the location context in a preset case, where the preset case includes at least one of the following:
receiving a notification of an interworking IWK event;
receiving an event report of an IWK network; or
a waiting duration of the LMF reaching a preset duration.

In some embodiments, the processor processing the location context in the preset case specifically includes one of the following:
deleting or updating the location context in a case where the notification of the IWK event is received;
deleting the location context in a case where the notification of the IWK event is received and the waiting duration of the LMF reaches the preset duration;
deleting the location context in a case where the notification of the IWK event is received, the waiting duration of the LMF reaches the preset duration, and the event report is not received in the preset duration;
deleting the location context in a case where the waiting duration of the LMF reaches the preset duration; or
deleting or updating the location context in a case where the event report is received.

In some embodiments, the processor is further configured to perform the following operations:
receiving the IWK event notification sent by a gateway mobile location center GMLC of a second network;
receiving the IWK event notification sent by a unified data management UDM; or
receiving the event report sent by the gateway mobile location center GMLC of the second network.

In some embodiments, the processor is further configured to perform the following operations:
subscribing to the notification of the IWK event from the UDM.

In an eighth aspect, the present disclosure provides a network element of a first network, where a terminal device moves from the first network to a second network, and the network element of the first network includes a memory, a transceiver, and a processor:
where the memory is configured to store a computer program; the transceiver is configured to send and receive data under a control of the processor; the processor is configured to read the computer program in the memory and perform the following operations:
sending a gateway mobile location center GMLC address of the first network and a GMLC address of the second network to the terminal device.

In some embodiments, the processor sending the gateway mobile location center GMLC address of the first network and the GMLC address of the second network to the terminal device specifically includes:
sending the GMLC address of the first network and the GMLC address of the second network to the terminal device in a case where the terminal device has a IWK capability.

In some embodiments, the network element of the first network is a mobility management entity MME or an access and mobility management function AMF.

In some embodiments, the GMLC address of the first network and the GMLC address of the second network are queried and obtained by the MME or the AMF through a network repository function NRF; or,
the GMLC address of the first network and the GMLC address of the second network are obtained by the MME or the AMF from a GMLC of the second network.

In a ninth aspect, the present disclosure provides a core network element, including a memory, a transceiver, and a processor:
where the memory is configured to store a computer program; the transceiver is configured to send and receive data under a control of the processor; the processor is configured to read the computer program in the memory and perform the following operations:
in a case where a terminal device moves from a first network to a second network and receives a first message, initiating positioning of the terminal device to obtain location information, where the first message is used to request for obtaining the location information of the terminal device; and
sending the location information for the first message.

In some embodiments, the first message includes one of the following:
a first request requiring to provide the location information of the terminal device; or
an indication that the location information of the terminal device is requested in an event report of an interworking IWK network.

In some embodiments, the first message includes the first request, the core network element includes a gateway mobile location center GMLC of the second network, where the processor is further configured to perform the following operations:
receiving the first request sent by a GMLC of the first network.

In some embodiments, the first request includes a first location parameter which is applicable to the first network, where the processor initiating the positioning of the terminal device to obtain the location information specifically includes:
mapping the first location parameter to be a second location parameter which is applicable to the second network; and
initiating a mobile terminated location request MT-LR process according to the second location parameter to obtain the location information;
where the sending the location information for the first message includes: sending the location information to the GMLC of the first network.

In a tenth aspect, the present disclosure provides a gateway mobile location center, including a memory, a transceiver, and a processor:
where the memory is configured to store a computer program; the transceiver is configured to send and receive data under a control of the processor; the processor is configured to read the computer program in the memory and perform the following operations:
in a case where an event report of an interworking IWK network is received, sending a first request requiring to provide location information of a terminal device; and
receiving the location information for the first message.

In some embodiments, the event report may include at least one of the following: an indication that the location information of the terminal device is requested, or a location parameter of the terminal device.

In an eleventh aspect, the present disclosure provides a communication apparatus, applied to a terminal device and including:
a processing unit, configured to, in a case where the terminal device moves from a first network to a second network, not release, by the terminal device, a location context and skip cancelling a location request.

In some embodiments, the processing unit is further configured to, in a case where a process of the location request ends, or, in a case where an event reporting phase of an interworking IWK network corresponding to the location request ends, delete the location context stored in the terminal device.

In some embodiments, the processing unit is further configured to, in a case where the terminal device detects an event report of an interworking IWK network, initiate, by the terminal, a process of location request to obtain location information of the terminal device, and add the location information to the event report.

In some embodiments, the apparatus further includes:
a communicating unit, configured to send an event report of an interworking IWK network;
where the event report includes at least one of the following: an indication that location information of the terminal device is requested, or a location parameter of the terminal device.

In a twelfth aspect, the present disclosure provides a communication apparatus, applied to a location management function LMF, where the location management function LMF stores a location context of a terminal device, and the apparatus includes:
a processing unit, configured to process the location context in a preset case, where the preset case includes at least one of the following:
receiving a notification of an interworking IWK event;
receiving an event report of an IWK network; or
a waiting duration of the LMF reaching a preset duration.

In some embodiments, the processing unit is configured to perform one of the following:
deleting or updating the location context in a case where the notification of the IWK event is received;
deleting the location context in a case where the notification of the IWK event is received and the waiting duration of the LMF reaches the preset duration;
deleting the location context in a case where the notification of the IWK event is received, the waiting duration of the LMF reaches the preset duration, and the event report is not received in the preset duration;
deleting the location context in a case where the waiting duration of the LMF reaches the preset duration; or
deleting or updating the location context in a case where the event report is received.

In some embodiments, the apparatus further includes: a communicating unit, configured to perform one of the following:
receiving the IWK event notification sent by a gateway mobile location center GMLC of a second network;
receiving the IWK event notification sent by a unified data management UDM; or
receiving the event report sent by the gateway mobile location center GMLC of the second network.

In some embodiments, the communicating unit is further configured to subscribe to the notification of the IWK event from the UDM.

In a thirteenth aspect, the present disclosure provides a communication apparatus, applied to a network element of a first network, where a terminal device moves from the first network to a second network, and the apparatus includes:
a communicating unit, configured to send a gateway mobile location center GMLC address of the first network and a GMLC address of the second network to the terminal device.

In some embodiments, the communicating unit is configured to send the GMLC address of the first network and the GMLC address of the second network to the terminal device in a case where the terminal device has a IWK capability.

In some embodiments, the network element of the first network is a mobility management entity MME or an access and mobility management function AMF.

In some embodiments, the GMLC address of the first network and the GMLC address of the second network are queried and obtained by the MME or the AMF through a network repository function NRF; or,
the GMLC address of the first network and the GMLC address of the second network are obtained by the MME or the AMF from a GMLC of the second network.

In a fourth aspect, the present disclosure provides a communication apparatus, applied to a core network element and including:
a processing unit, configured to, in a case where a terminal device moves from a first network to a second network and receives a first message, initiate positioning of the terminal device to obtain location information, where the first message is used to request for obtaining the location information of the terminal device; and
a communicating unit, configured to send the location information for the first message.

In some embodiments, the first message includes one of the following:
a first request requiring to provide the location information of the terminal device; or
an indication that the location information of the terminal device is requested in an event report of an interworking IWK network.

In some embodiments, the first message includes the first request, the core network element includes a gateway mobile location center GMLC of the second network, where the communicating unit is further configured to receive the first request sent by a GMLC of the first network.

In some embodiments, the first request includes a first location parameter which is applicable to the first network, where the processing unit is specifically configured to map the first location parameter to be a second location parameter which is applicable to the second network, and initiate a mobile terminated location request MT-LR process according to the second location parameter to obtain the location information;
where the sending the location information for the first message includes: sending the location information to the GMLC of the first network.

In a fifteenth aspect, the present disclosure provides a communication apparatus, applied to a gateway mobile location center GMLC and including:
a sending unit, configured to, in a case where an event report of an interworking IWK network is received, send a first request requiring to provide location information of a terminal device; and
a receiving unit, configured to receive the location information for the first message.

In some embodiments, the event report may include at least one of the following: an indication that the location information of the terminal device is requested, or a location parameter of the terminal device.

In a sixteenth aspect, the present disclosure provides a processor-readable storage medium, where the processor-readable storage medium stores a computer program, and the computer program is used to cause the processor to execute the method according to any one of the first aspect, the second aspect, the third aspect and the fourth aspect.

In a seventeenth aspect, the present disclosure provides a computer program product, including instructions which, when run by a computer, cause the computer to execute the method according to any one of the first aspect, the second aspect, the third aspect and the fourth aspect.

### BRIEF DESCRIPTION OF DRAWINGS

The drawings herein are incorporated into and form a part of the description, showing embodiments conforming to the present disclosure, and are used to explain the principles of the present disclosure in conjunction with the description.
FIG. 1 is a schematic diagram of an interconnection architecture between a 5G core network and a 4G core network.
FIG. 2 is a schematic diagram of a communication method in an embodiment in the related art.
FIG. 3 is a schematic diagram of a communication method in another embodiment in the related art.
FIG. 4 is a schematic diagram of a communication method in another embodiment in the related art.
FIG. 5 is a schematic diagram of a communication method in another embodiment in the related art.
FIG. 6 is a schematic diagram of a communication method in another embodiment in the related art.
FIG. 7 is a schematic diagram of a communication method in an embodiment of the present disclosure.
FIG. 8 is a schematic diagram of a communication method in an embodiment of the present disclosure.
FIG. 9 is a schematic diagram of a communication method in another embodiment of the present disclosure.
FIG. 10 is a schematic diagram of a communication method in an embodiment of the present disclosure.
FIG. 11 is a schematic diagram of a communication method in another embodiment of the present disclosure.
FIG. 12 is a schematic diagram of a terminal device in an embodiment of the present disclosure.
FIG. 13 is a schematic diagram of a location management function in an embodiment of the present disclosure.
FIG. 14 is a schematic diagram of a network element of a first network in an embodiment of the present disclosure.
FIG. 15 is a schematic diagram of a core network element in an embodiment of the present disclosure.
FIG. 16 is a schematic diagram of a gateway mobile location center in an embodiment of the present disclosure.
FIG. 17 is a schematic diagram of a communication apparatus in an embodiment of the present disclosure.
FIG. 18 is a schematic diagram of a communication apparatus in another embodiment of the present disclosure.
FIG. 19 is a schematic diagram of a communication apparatus in another embodiment of the present disclosure.
FIG. 20 is a schematic diagram of a communication apparatus in another embodiment of the present disclosure.
FIG. 21 is a schematic diagram of a communication apparatus in another embodiment of the present disclosure.

Through the above drawings, specific embodiments of the present disclosure have been illustrated, and there will be more detailed descriptions in the following. These drawings and textual descriptions are not intended to limit the scope of the inventive concept of the present disclosure in any way, but to illustrate the concepts of the present disclosure to those skilled in the art by reference to specific embodiments.

### DESCRIPTION OF EMBODIMENTS

Hereinafter, exemplary embodiments will be described in detail with reference to the accompanying drawings, in which the same or similar elements are designated with the same reference numerals throughout the various figures unless otherwise indicated. The described exemplary embodiments are not to be construed as representing all possible embodiments that are in accordance with the present disclosure. On the contrary, they are merely examples of apparatuses and methods consistent with some aspects of the present disclosure as detailed in the appended claims.

In the embodiments of the present disclosure, the term "and/or" describes the association relationship between associated objects, indicating that there can be three kinds of relations, for example, A and/or B can represent three situation including: there is A alone, there are both A and B, and there is B alone. The character "/" generally indicates that the associated objects are in an "or" relationship.

In the embodiments of the present disclosure, the term "multiple" refers to two or more than two, and other quantifiers are similar.

The technical solutions in the embodiments of the present disclosure will be described as follows clearly and completely in conjunction with accompanying drawings in the embodiments of the present disclosure. Apparently, the described embodiments are merely a part, rather than all of the embodiments of the present disclosure. Based on the embodiments of the present disclosure, all other embodiments obtained by those of ordinary skill in the art without paying creative effort shall fall within the protection scope of the present disclosure.

The terminal device can move between different networks, for example, the terminal device can move between an evolved packet system (Evolved Packet System, EPS) network of a 4th generation mobile communication technology (the 4th generation mobile communication technology, 4G) and a 5th generation system (5GS) network of the 5th generation mobile communication technology (5th Generation Mobile Communication Technology, 5G).

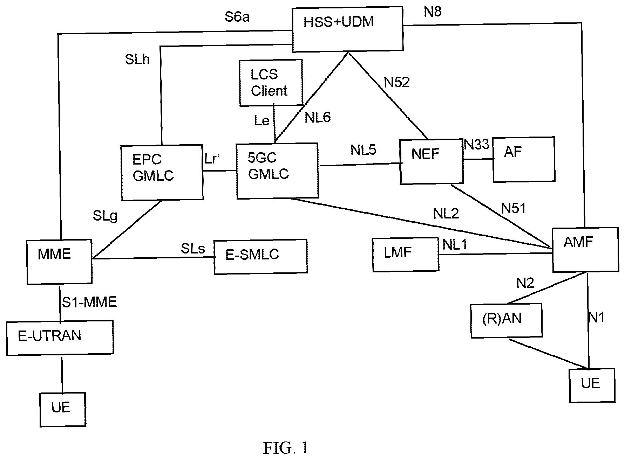

FIG. 1 is a schematic diagram of an interconnection architecture between a 5G core network (5GC) and a 4G core network (4GC).

Here, a home subscriber server (Home Subscriber Server, HSS) can be understood as a database which is used to store information related to contract with users.

A unified data management function (Unified Data Management function, UDM) is responsible for management of user identification, contract data, authentication data, and registration management of a service network element of users.

A location service client (Location Service Client, LCS Client).

An evolved packet core gateway mobile location centre (Evolved Packet Core Gateway Mobile Location Centre, EPC GMLC).

A network exposure function (Network Exposure Function, NEF) is located between the 5G core network and an external third-party application function body, and is responsible for managing exposed network data.

An application function (Application Function, AF) refers to various services at an application layer, which may be either an internal application of the operator or a third-party application.

A mobility management entity (Mobility Management Entity, MME) is responsible for signaling processing and other functions, and may also be understood as responsible for a control plane function of the EPC core network.

An evolved service mobile location centre (E-SMLC) converts a location request requested by the client request into a corresponding radio access network (UTRAN) measurement parameter, selects a location method, and calculates a final result and accuracy for the returned location estimation.

A gateway mobile location centre (GMLC) provides access from an external LCS Client to a mobile network, forwards the location request and response to the current MME of the terminal device, and is responsible for the authentication and authorization of the LCS Client.

A location management function (Location Management Function, LMF) manages resources and time of a location activity.

An access and mobility management function (Access and Mobility Management Function, AMF) is responsible for registration, connection, availability, mobility, security of access management and service authorization.

An evolved access network (E-UTRAN), (radio) access network ((Radio) Access Network, (R)AN).

Here, S6a, N8, SLh, Lr, Le, NL6, NL5, N33, N52, N51, NL2, NL1, N2, N1, S1-MME, SLs, SLg are interfaces. For example, an N2 is an interface between the AMF and the (R)AN, and so on, and they are not listed one by one here.

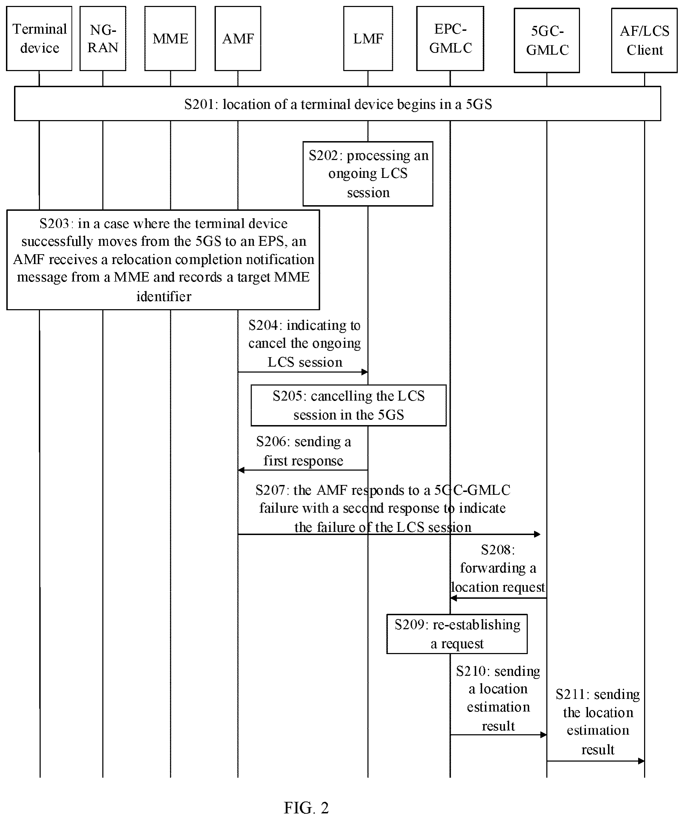

In a case where the terminal device moves from a kind of network to another kind of network, for example, in a case where the terminal device moves from the 5GS to the EPS, in the related art, a communication method shown in FIG. 2 can be adopted to achieve continuity of location service for the immediate location request from the 5GS to the EPS.

As shown in FIG. 2, the communication method includes the following steps.

S201: location of a terminal device begins in a 5GS.

Here, S201 may employ a 5GC-Mobile Terminated Location Request (Mobile Terminated Location Request, MT-LR) process, or a 5GC-Mobile Originated Location Request (Mobile Originated Location Request, MO-LR) process. The repeated details of the MT-LR process and the MO-LR process will not be described in the embodiment.

S202: a LMF processes an ongoing LCS session.

S203: in a case where the terminal device successfully moves from the 5GS to an EPS, an AMF receives a relocation completion notification message from a MME and records a target MME identifier (ID).

S204: the AMF indicates the LMF to cancel the ongoing LCS session.

S205: the LMF cancels the LCS session in the 5GS.

S206: the LMF sends a first response to the AMF after the cancellation is completed, where the first response includes a response for invoking a location service of the LMF, such as an Nlmf_Location_DetermineLocation response. The LMF may include a current available location result in the response, although it may not meet a requested Quality of Service (Quality of Service, QoS).

S207: the AMF responds to a 5GC-GMLC failure with a second response (Namf_Location_ProvidePositioningInfo) to indicate the failure of the LCS session.

Here, the second response may include cause information (cause) such as cause=handover (handover, HO) to EPC, and also include the target MME ID of the terminal device. The second response may also include the location result in S206.

It can be understood that the cancellation of the LCS session between the terminal device and a NG-RAN needs to be completed before the terminal device is handed over to Long Term Evolution (Long Term Evolution, LTE).

S208: the 5GC-GMLC forwards a location request to an EPC-GMLC, including all parameters of a LCS request and the target MME ID.

Here, the location result in S206 and S207 can also be one of the candidates for the location result of the EPC-GMLC.

S209: the EPC-GMLC re-establishes a request.

S210: the EPC-GMLC returns a location estimation result of the terminal device to the 5GC-GMLC.

S211: the 5GC-GMLC forwards the location estimation result to an AF/LCS Client.

Here, the AF/LCS Client is oblivious to the process of the terminal device moving from the 5GS to the EPS.

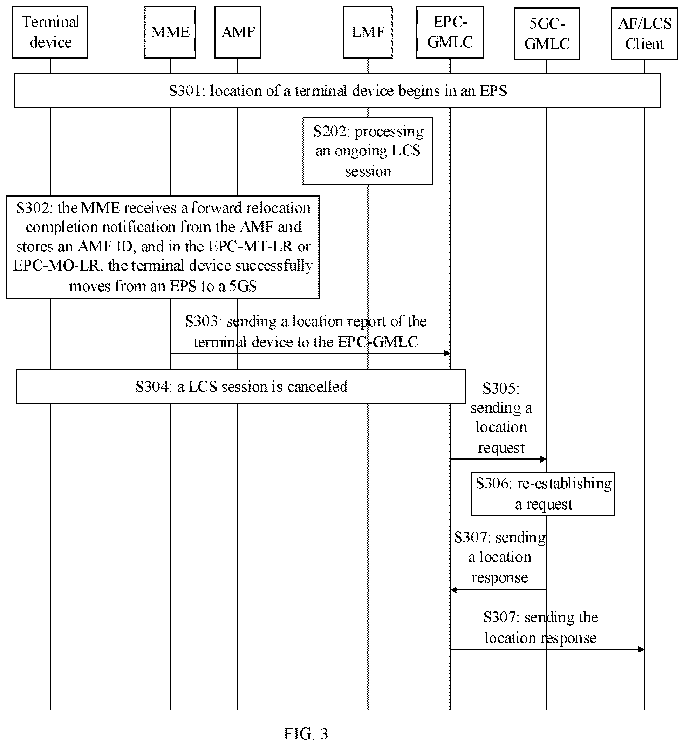

In the related art, the communication method shown in FIG. 3 can be adopted to achieve continuity of location service for the immediate location request from the EPS to the 5GS.

As shown in FIG. 3, the communication method includes the following steps.

S301: location of the terminal device begins in an EPS.

It can be understood that, to avoid complicated statement, the technical features related to the implementation embodiment and the above implementation embodiment are not repeated in detail.

Exemplarily, S301 can use an EPC-MT-LR process or an EPC-MO-LR process. The repeated details of the MT-LR process and the MO-LR process will not be described in the embodiment.

S302: an MME receives a forward relocation completion notification from an AMF and stores an AMF ID. In the EPC-MT-LR or EPC-MO-LR, the terminal device successfully moves from an EPS to a 5GS.

S303: the MME sends a location report of the terminal device to a EPC-GMLC.

Here, the location report does not include a type of handover event, a terminal device identifier, or target node information, and the EPC-GMLC identifies a handover based on the event type and a target AMF.

S304: a LCS session is cancelled.

Here, the process of cancelling the LCS session can be found in the related art, and will not be described here.

S305: the EPC-GMLC forwards a location request to a 5GC-GMLC.

Here, the location request includes all the parameters of a LCS request and the target AMF ID.

S306: the 5GC-GMLC re-establishes a request and forwards the LCS request to the target AMF which receives the same. The LCS session is initiated in 5GS.

S307: the 5GC-GMLC returns a location response to the EPC-GMLC.

S308: the EPC-GMLC forwards the location response from the 5GC-GMLC to an LCS Client.

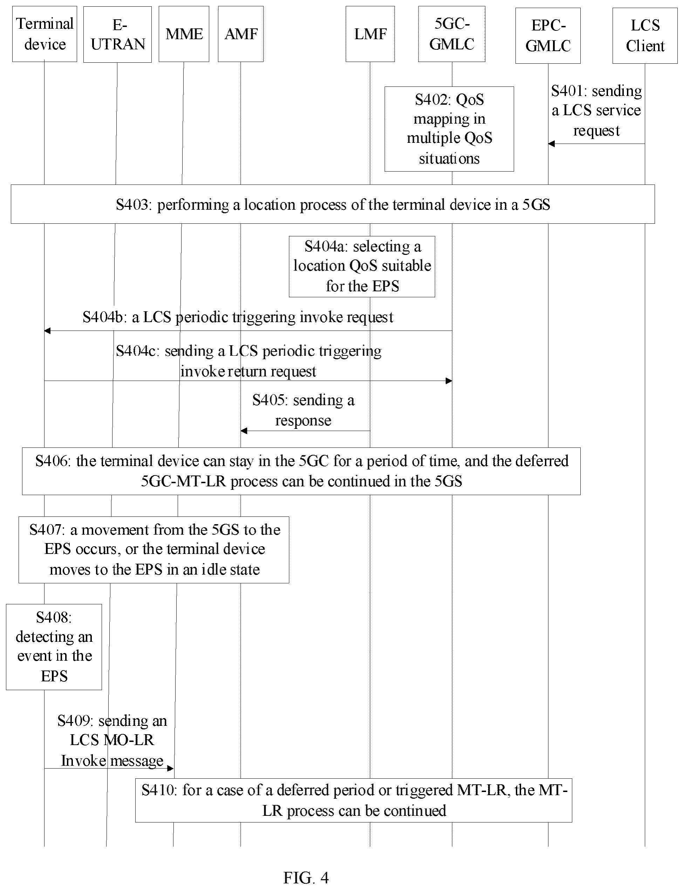

In the related art, the communication method shown in FIG. 4 can be adopted to achieve continuity of location service for the deferred location request from the 5GS to the EPS.

As shown in FIG. 4, the communication method includes the following steps.

S401: a LCS client sends a LCS service request to an EPC-GMLC.

S402: QoS mapping in multiple QoS situations.

Here, for the periodic or targeted 5GC-MT-LR multiple location QoS (multiple location QoS) levels initiated in a 5GS, to support the continuity of the LCS in the EPS, the 5GC-GMLC performs a location QoS mapping to obtain the mapped location QoS suitable for the EPS and forwards the original (multiple location QoS) to the LMF.

S403: performing a location process of the terminal device in the 5GS.

Here, S403 can adopt the deferred 5GC-MT-LR process, which will not be described here.

If a terminal device does not receive a LCS periodic triggering invoke request message, after the terminal device completes the movement, the AMF notifies a 5GC-GMLC 5GS to move to an EPS, and the notification includes a MME ID. Then, the 5GC-GMLC sends the location QoS, which is obtained by mapping, to the EPC-GMLC to trigger the deferred/periodic MT-LR EPS, and then the following S404aS410 are skipped.

If the terminal device receives the LCS periodic triggering invoke request message, the following S404a-S410 are executed.

S404a: selecting a location QoS suitable for the EPS.

Here, in the periodic or triggered 5GC-MT-LR multiple location QoS cases, if a LCS QoS class in the location request is "multiple QoS class" and the LMF determines that the terminal event reporting supports the access type including "E-UTRAN connected to EPC", then the LMF selects to map a location QoS suitable for the EPS. If the GMLC performs QoS mapping in S402, then the LMF is responsible for performing the mapping of the location QoS suitable for the EPS.

S404b: the LMF sends the LCS periodic triggering invoke request to the terminal device.

S404c: the terminal device sends a LCS periodic triggering invoke return request to the LMF.

Here, S404b-S404c can be understood as follows: in a case of a deferred period or when triggered by 5GC-MT-LR, the LMF sends a LCS periodic triggering invoke request to the terminal device. If S404a is performed, in addition to the multiple location QoS, the request also includes the mapping location QoS for the EPS. The terminal device returns the result response of the LCS periodic triggering invoke to the LMF.

S405: the LMF sends a response (such as a Nlmf_Location_DetermineLocation response).

S406: the terminal device can stay in the 5GC for a period of time, and the deferred 5GC-MT-LR process can be continued in the 5GS.

S407: a movement from the 5GS to the EPS occurs, or the terminal device moves to the EPS in an idle state.

S408: the terminal device detects an event in the EPS.

S409: the terminal device sends an LCS MO-LR Invoke (Invoke) message to the MEE.

S410: for a case of a deferred period or triggered MT-LR, the MT-LR process can be continued.

Here, S408-S410 can be understood as: for the case of the deferred period or triggered MT-LR, when the terminal device detects an event in the EPS, it needs to send a LCS MO-LR (Invoke) message of an event report (event report) to the MME. If the location QoS in 5GS is multiple location QoS, then the LCS MO-LR Invoke message includes the mapped location QoS suitable for the EPS. For the case of the deferred period or triggered MT-LR, the MT-LR process can be continued.

It can be understood that if the terminal device detects the movement is not completed but the event is triggered, that is, S408 occurs before the movement is completed, then the terminal device can wait until the movement is completed and then send the triggered LCS MO-LR Invoke message.

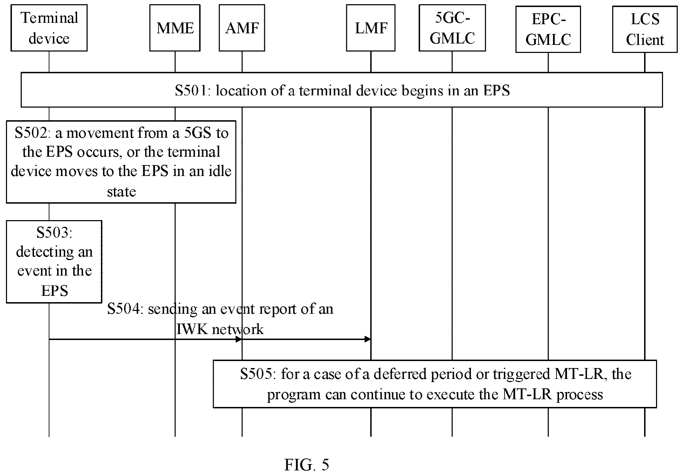

In the related art, the communication method shown in FIG. 5 can be adopted to achieve continuity of location service for the deferred location request from the EPS to the 5GS.

As shown in FIG. 5, the communication method includes the following steps.

S501: location of a terminal device begins in an EPS.

Here, location of the terminal device begins with the deferred EPC-MT-LR process in the periodic location and triggering location process.

If the terminal device does not receive the LCS periodic triggering event invoke request message, after the terminal device completes the movement, the MME notifies the EPC-GMLC to move to the 5GS, and the notification includes the AMF ID of the terminal device. Then the EPC-GMLC sends a location request to the 5GC-GMLC to trigger the deferred/periodic MT-LR process, and then the following S502-S505 are skipped.

If the terminal device receives the LCS periodic triggering event invoke message, the following S502-S505 are executed.

S502: a movement from a 5GS to the EPS occurs, or the terminal device moves to the EPS in an idle state.

S503: the terminal device detects an event in the EPS.

S504: the terminal device sends an event report of an IWK network through the AMF to the LMF.

S505: for a case of a deferred period or triggered MT-LR, the program can continue to execute the MT-LR process.

Here, S503-S505 can be understood as: for the case of the deferred period or triggered MT-LR, when the terminal device detects an event in the 5GS, it sends the event report of the IWK network to the LMF through the AMF. For the case of the deferred period or triggered MT-LR, the MT-LR process can be continued to be executed.

It can be understood that if the terminal device detects the movement is not completed but the event is triggered, that is, S503 occurs before the movement is completed, then the terminal device can wait until the movement is completed and then send the event report.

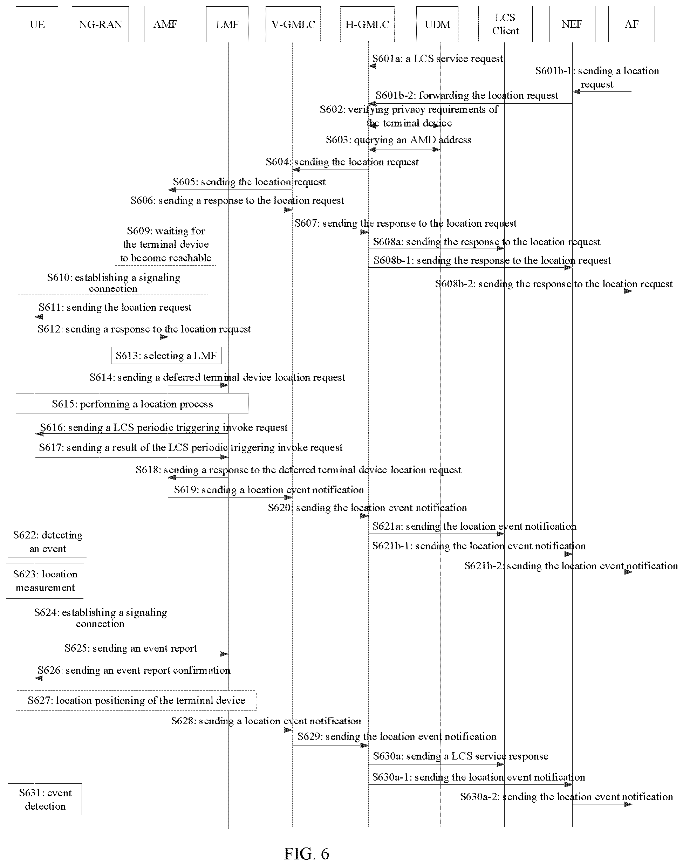

As shown in FIG. 6, the deferred 5GC-MT-LR process includes the following steps.

S601a: a LCS Client sends a LCS service request to an H-GMLC.

Here, the LCS service request is used to report periodic, triggered or available location events of a terminal device.

S601b-1: an AF sends a location request to a NEF.

Here, the AF can send the location request to the NEF by invoking a (Nnef_EventExposure_Subscribe) service.

S601b-2: the NEF forwards the location request to a H-GMLC. Here, the NEF allocates a location deferred request (Location Deferred Request, LDR) reference number locally and sends it to the H-GMLC.

S602: the H-GMLC verifies privacy requirements of the terminal device.

S603: the H-GMLC queries an AMF address from a UDM. In a case of roaming, it queries address of a visited gateway mobile location center (V-GMLC).

S604: the H-GMLC sends the location request to the V-GMLC.

Here, a non-roaming terminal skips this step. For a roaming terminal, if no V-GMLC address is received in S603, the H-GMLC will obtain the V-GMLC address and forward the location request to the V-GMLC. The H-GMLC also includes contact address (notification target address, such as uniform resource identifier (Uniform Resource Identifier, URI) and LDR reference number) for event reporting in S620 and S629.

S605: the V-GMLC sends the location request to the AMF.

Here, the V-GMLC can invoke the Namf_Location_ProvidePositioningInfo Request service operation to forward the location request to the serving AMF and includes the H-GMLC contact address and LDR reference number.

S606: the AMF sends a response to the location request to the V-GMLC.

S607: the V-GMLC sends the response to the location request to the H-GMLC.

S608a: the H-GMLC sends the response to the location request to the LCS Client.

S608b-1: the H-GMLC sends the response to the location request to the NEF.

S608b-2: the NEF sends the response to the location request to the AF.

Here, S606-S608 can be understood as: if the AMF supports deferred location request, the AMF will return a confirmation through H-GMLC and (in roaming situations) V-GMLC to the external LCS Client, indicating that it has accepted the deferred location request. When using V-GMLC, resources can be selectively released for the deferred location request.

S609: the AMF will wait for the terminal device to become reachable.

Exemplarily, if the terminal device is currently unreachable (for example, using an extended discontinuous reception mode (eDRX) or a low power operation mode (PSM)).

S610: the AMF establishes a signaling connection with the terminal device.

Exemplarily, once the terminal device becomes reachable, if the terminal device is in a connection management (CM) idle state, the AMF will initiate a network-triggered service request process and establish the signaling connection with the terminal device.

S611: the AMF sends the location request to the terminal device.

S612: the terminal device sends a response to the location request to the AMF.

S611-S612 can be understood as: the AMF notifies the location request to the terminal device and verifies the privacy requirement which is requested in the location request received in S605 and supported by the terminal device. In a case of regular positioning or triggered positioning, the notification from AMF to the terminal device includes the type of deferred location request.

S613: the AMF selects a LMF.

S614: the AMF sends a deferred terminal device location request to the LMF.

Here, the AMF can invoke the Nlmf Location _DetermineLocation Request service operation to initiate the deferred terminal device location request.

S615: the LMF performs a location process.

Here, the LMF can request and obtain the terminal device location function (for example, the location function can indicate the periodic and triggered location types supported by the terminal device and the event report access type supported by the terminal device). The LMF can also obtain the location information of the terminal device, such as for requests for available location events for the terminal device, or for initial location requests for periodic or triggered terminal device location, the LMF skips S616 and S617.

S616: the LMF sends a LCS periodic triggering invoke request to the terminal device.

Exemplarily, if a periodic or triggered location is required, the LMF can invoke the Namf_Communication_N1N2MessageTransfer service operation and send a supplementary service LCS periodic triggering invoke request to the terminal device through the serving AMF.

S617: the terminal device sends a result of the LCS periodic triggering invoke request to the LMF.

Exemplarily, if the request in step S616 is supported, the terminal device will return a supplementary service confirmation to the LMF, which is transmitted through the service AMF using an immediate routing identifier and is passed to the LMF using the Namf_Communication_N1MessageNotify service operation.

S618: the LMF sends a response to the deferred terminal device location request to the AMF.

Exemplarily, the AMF invokes the Namf_Location _DetermineLocation Response service operation to respond to the deferred terminal device location request in S614.

S619: the AMF sends a location event notification to the V-GMLC.

Exemplarily, the AMF invokes the Namf_Location_EventNotify service operation to perform roaming on the V-GMLC or to perform non-roaming on the H-GMLC, and includes the location information in the response to the deferred terminal device location request received in S618, as well as confirming whether the periodic or triggered location has been successfully activated in the terminal device. The V-GMLC (if used) can be the same V-GMLC as used in S605 and S606, or a different V-GMLC. In the case of different V-GMLCs, the AMF includes the H-GMLC contact address and the LDR reference number. The AMF further includes the LMF identification and the implemented location QoS accuracy (if it is received in S618), the H-GMLC contact address and the LDR reference number. Then, the AMF can release all resources for the location request and stop supporting the process.

S620: the V-GMLC sends the location event notification to the H-GMLC.

Exemplarily, the non-roaming terminal skips S620. For a roaming terminal, the V-GMLC uses the HGMLC contact address received in S619 (for different VGMLCs) or the HGMLC received and stored in S604 to forwards the response received in S619 to the H-GMLC, and includes the received LDR reference number and any LMF identification therein. Then the V-GMLC can release all resources for the location request and stop supporting the process.

S621a: the H-GMLC sends the location event notification to the LCS Client.

S621b-1: the H-GMLC sends the location event notification to the NEF.

S621b-2: the NEF sends the location event notification to the AF.

Here, if the location request in S601 is for the available location event of the terminal device, the process terminates here and does not execute S622-S631.

S622: the terminal device detects an event.

Exemplarily, for the periodic or triggered location request successfully executed in S616 and S617, the terminal device monitors the occurrence of the triggered or periodic event requested in S616.

S623: the terminal device performs location measurement.

Exemplarily, the terminal device obtains any location measurement or location estimation requested or allowed in step S616.

S624: the terminal device establishes a signaling connection with the AMF.

Exemplarily, when the terminal device is in a CM-IDLE state, the terminal device triggers a service request to establish the signaling connection with the AMF.

S625: the terminal device sends an event report to the LMF.

Exemplarily, the terminal device sends a supplementary service event report message to the LMF, which is transmitted through a serving AMF (possibly different from the original serving AMF in S614-S616), and is passed to the LMF using the Namf_Communication _N1MessageNotify service operation. The event report can indicate the type of the reported event (for example, whether it is a normal event or the maximum reporting interval has expired), and can include an embedded location message, including any location measurement or location estimation and the timestamp of the location estimation (if available in step S623). The terminal device also includes the deferred routing identifier received in S616 in the network-attached storage (Network Attached Storage, NAS) transmission message for transmitting the event report from the terminal device to the AMF. Then, the AMF forwards the event report to the serving LMF or any appropriate LMF, depending on whether the deferred routing identifier indicates a specific LMF or any (default) LMF. The terminal device further includes the H-GMLC contact address, LDR reference number, whether to report the location estimation, and if so, the location QoS in the event report, and the any predetermined location time indicated in S616 for regular reporting.

S626: the LMF sends an event report confirmation to the terminal device.

Exemplarily, in a case where the LMF receives the event report, if the LMF is able to handle it, the LMF will update the status of the event report (for example, the number of event reports received from the terminal device so far and/or the duration of the event report), and return the supplementary service confirmation of the event report to the terminal device.

S627: location positioning of the terminal device.

Exemplarily, in the case of the event report requiring location estimation, the LMF can perform location positioning. Then, the LMF uses the location measurement value obtained in this step and/or the location estimation value received in S625 to determine a location location information of the terminal device. The LMF further can determine the timestamp of the location estimation.

S628: the LMF sends a location event notification to the V-GMLC.

Exemplarily, in the case of LMF roaming, a V-GMLC is selected, and then the LMF invokes the Ngmlc_Location_EventNotify to indicate the type of event report, the H-GMLC contact address and LDR reference number, the service LMF's ID, and the location estimation and timestamp of the location estimation (if the location estimation and timestamp are obtained in S627) for the selected V-GMLC or the serving operation H-GMLC. If multiple QoS classes were used in the initial location request, the LMF will provide the achieved location QoS accuracy in S627.

S629: the V-GMLC sends the location event notification to the H-GMLC.

Here, the non-roaming terminal device skips S629. For a roaming terminal device, the V-GMLC invokes the Ngmlc Location EventNotify service operation to forward the information received in S628 to the H-GMLC, and the H-GMLC identifies the periodic and triggered location request from the LDR reference number.

S630a: the H-GMLC sends a LCS service response to the LCS Client.

S630b-1: the H-GMLC sends the location event notification to the NEF.

S630b-2: the NEF sends the location event notification to the AF.

Exemplarily, the H-GMLC uses the LDR reference number received in S628 or S629 to identify the periodic and triggered location requests received in S601, and then sends the event type of the event report and any location estimation as well as the timestamp of the location estimation (if available) and the used positioning method to the external LCS Client or AF (through NEF), and sends the LDR reference number to the LCS Client. The H-GMLC further can verify the privacy requirements of the terminal device before reporting the event and any location. If multiple QoS classes are used in the initial location request, the LMF will provide the achieved location QoS accuracy in S627. If an indication for additional checks is received in S61, the H-GMLC will verify whether the location estimation of the terminal device is within a target area and send the event report to the LCS Client or the AF.

S631: event detection.

Exemplarily, the terminal device continues to monitor further periodic events or triggered events as shown in S622, and starts S623-S630 each time a triggered event is detected.

However, as can be seen from the above analysis, there is a problem in the related art where the location context cannot be maintained in different networks (such as the 5GS and the EPS) when the terminal device moves between different networks.

For example, for deferred location, the LMF in the network maintains a location context for a deferred location request (deferred location request). If the 5G LMF maintains the location context and the terminal device moves from the 5G to the 4G and sends an event report through the EPS control plane, the processing of the location context stored in the 5G LMF is missing.

For example, some event reports need to carry the location information of the terminal device, such as when the LCS Client requires the location information of the terminal device at the time of the event occurrence. When an interworking (Interworking, IWK) event occurs, since the LMF does not know that the location information of the terminal device requested by the LCS Client or the AF (the location context is missing), the network will not initiate the location process of the terminal device, and the terminal device cannot perform location estimation of the terminal device in a second network (a mobile network after moving) based on a location parameter obtained from a first network (a mobile network before moving), resulting in the event report sent to the LCS Client or the AF lacking the location information of the terminal device.

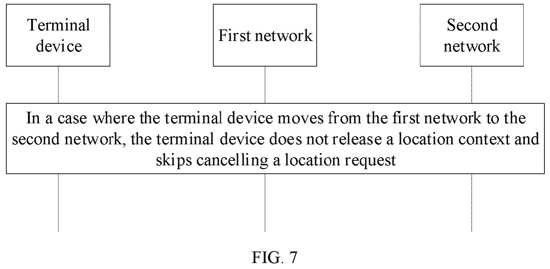

To avoid solving at least one of the above problems regarding the location context, the present disclosure proposes a technical conception through creative labor as shown in FIG. 7: in a case where a terminal device moves from a first network to a second network, the terminal device does not release a location context and skips cancelling a location request.

Here, the terminal device not releasing the location context can be understood as the terminal device storing the location context rather than deleting it. Skipping cancelling the location request can be understood as sustaining or continuing to make the location request.

Exemplarily, in the related art, in a case where the terminal device moves from the first network to the second network, the terminal device deletes the location context and cancel the location request. However, in this embodiment, the terminal device does not release the location context and continues to perform the location request and skips cancelling the location request, so that the terminal device can continue to monitor whether a request is triggered or a periodic event occurs, which enables the terminal device to report the location context in a case where it is monitored that the request is triggered or the periodic event occurs, thereby determining location information of the terminal device, and thus achieving the reliability and effectiveness of the movement of the terminal device between different networks.

Here, the first network and the second network are two different networks. The first network can be understood as a network where the terminal device was located before moving, and the second network is a network where the terminal device is located after moving. Based on the above analysis, if the first network is a 5GS, then the second network can be an EPS; if the first network is an EPS, then the second network can be a 5GS. It is not listed one by one here.

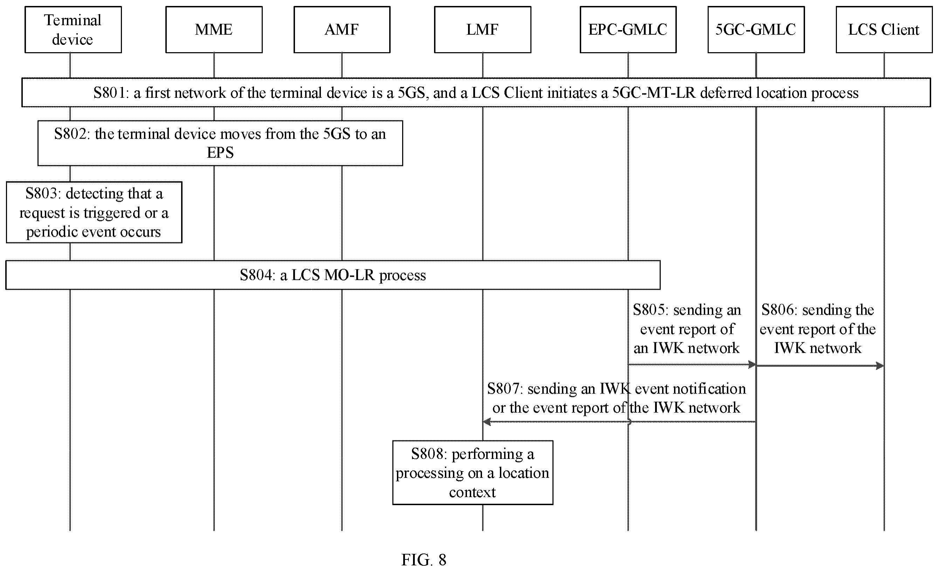

Please refer to FIG. 8, which is a schematic diagram of a communication method in an embodiment of the present disclosure. As shown in FIG. 8, the communication method includes the following steps.

S801: a first network of a terminal device is a 5GS, and a LCS Client initiates a 5GC-MT-LR deferred location process.

S802: the terminal device moves from the 5GS to an EPS.

Here, during the network handover process, the network sends a H-GMLC (5GC-GMLC) address to the terminal device.

S803: the terminal device detects that a request is triggered or a periodic event occurs.

S804: a LCS MO-LR process.

Exemplarily, for a case of a deferred period or triggered MT-LR, when the terminal device detects an event in the EPS, it sends a LCS MO-LR Invoke message of an event report of an IWK network to a MME. For the case of the deferred period or triggered MT-LR, the MT-LR process can be continued.

Here, the LCS MO-LR Invoke message sent by the terminal device to the MME carries an EPC-GLMC address and a 5GC-GLMC address. The method to obtain the 5GC-GLMC address includes one of the following.

The first method is a terminal device enhancement method. Exemplarily, the 5GC-MT-LR deferred location process initiated in S801 is enhanced, when the terminal device supports the IWK, the first network sends the 5GC-GMLC address and the EPC-GMLC address to the terminal device, and the terminal device carries a GMLC address corresponding to the network when initiating an MO process based on an accessed network.

Here, the 5GC-GMLC address and the EPC-GMLC address sent to the terminal device specifically can be the MME of the first network or the AMF of the first network.

For example, the MME of the first network sends the 5GC-GMLC address and the EPC-GMLC address to the terminal device, or the AMF of the first network queries whether the terminal device has an IWK capability. If it is determined that the terminal device supports IWK, the AMF of the first network sends the 5GC-GMLC address and the EPC-GMLC address to the terminal device.

For another example, the 5GC-GMLC address and the EPC-GMLC address can also be required and obtained by the MME through the NRF.

The second method is a network element enhancement method. Exemplarily, the EPC-GMLC stores the 5GC-GMLC address, and the LCS MO-LR Invoke message sent by the terminal device carries the 5GC-GMLC address, then the EPC-GMLC can recognize and forward it.

That is to say, the GC-GMLC address and the EPC-GMLC address can be obtained by the MME or the AMF from the EPC-GMLC.

The second method is a NRF query method. Exemplarily, a MM performs an ENRF query for the 5GC-GMLC address; or, the AMF performs an ENRF query for the 5GC-GMLC address.

It should be understood that the above examples are exemplary demonstrations of the method for obtaining the 5GC-GMLC address based on the example of the terminal device moving from the 5GS to the EPS. If the moving scenario is that the terminal device moves from the EPS to the 5GS, the above method of obtaining can also be used to obtain the 5GC-GMLC address, and repeated detailed will not be described in the embodiment.

S805: the EPC-GMLC forwards the event report of the IWK network to the 5GC-GMLC.

S806: the 5GC-GMLC sends the event report of the IWK network to the LCS Client. Here, the LCS Client is oblivious to the IWK network.

S807: the 5GC-GMLC sends an IWK event notification or the event report of the IWK network to the LMF.

Here, the 5GC-GMLC can send the IWK event notification or the event report of the IWK network to the LMF according to a LMF address identifier. The LMF address identifier can be a routing ID, possibly an IP address, such as a universally unique identifier (Universally Unique Identifier, UUID) or a URI, or it could be a locally set address identifier, which is not limited in the embodiment.

S808: the LMF performs a processing on a location context.

Exemplarily, the LMF performs a processing on the location context in a preset case, the preset case includes at least one of the following:
receiving a notification of an interworking IWK event;
receiving an event report of an IWK network; or
a waiting duration of the LMF reaching a preset duration.

Correspondingly, the processing the location context in the preset case includes one of the following:
deleting or updating the location context in a case where the notification of the IWK event is received;
deleting the location context in a case where the notification of the IWK event is received and the waiting duration of the LMF reaches the preset duration;
deleting the location context in a case where the notification of the IWK event is received, the waiting duration of the LMF reaches the preset duration, and the event report is not received in the preset duration;
deleting the location context in a case where the waiting duration of the LMF reaches the preset duration; or
deleting or updating the location context in a case where the event report is received.

Here, the preset duration can be determined based on requirements, historical records, and experiments, etc., and is not limited in the embodiment. For example, the preset duration can be the maximum number of waits * the maximum length of duration cycles.

In some embodiments, in a case where a process of the location request ends, or, in a case where an event reporting phase of an interworking IWK network corresponding to the location request ends, the terminal device can delete the location context stored in the terminal device.

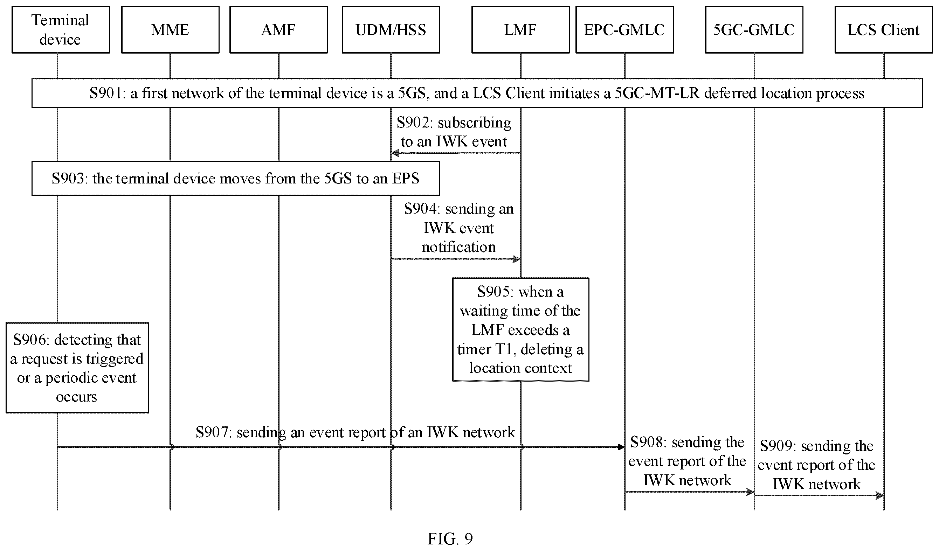

Please refer to FIG. 9, FIG. 9 is a schematic diagram of a communication method in another embodiment of the present disclosure. As shown in FIG. 9, the communication method includes the following steps.

S901: a first network of a terminal device is a 5GS, and a LCS Client initiates a 5GC-MT-LR deferred location process.

S902: a LMF subscribes to an IWK event from a UDM (or HSS).

S903: the terminal device moves from the 5GS to the EPS.

Here, during the movement of the terminal device, a H-GMLC (5GC-GMLC) address is sent to the terminal device by the network.

S904: the UDM sends an IWK event notification to the LMF.

Based on the above examples, the LMF can receive the IWK event notification sent by a GMLC of a second network, or an event report of an IWK network sent by the GMLC of the second network, or the IWK event notification sent by the UDM.

S905: when a waiting time of the LMF exceeds a timer T1, deleting a location context.

Here, a duration of the timer can be a preset duration as in the above embodiments.

In some embodiments, the LMF can directly delete the location context.

S906: the terminal device detects that a request is triggered or a periodic event occurs.

S907: the terminal device sends the event report of the IWK network.

Here, the event report of the IWK network can include event information, as well as an associated ID corresponding to the event information.

S908: the EPC-GMLC sends the event report of the IWK network to the 5GC-GMLC.

S909: the 5GC-GMLC sends the event report of the IWK network to the LCS Client. Here, the LCS Client is oblivious to the IWK.

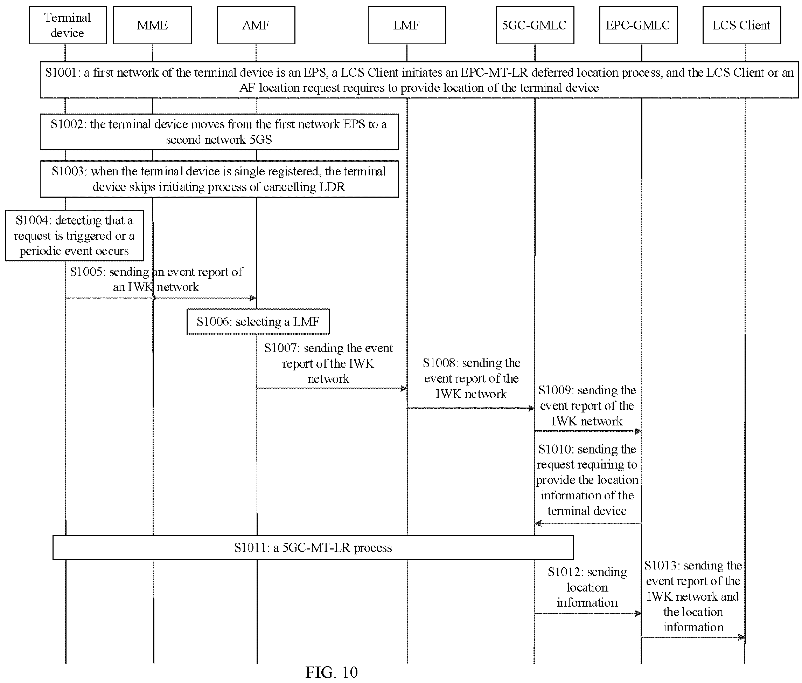

Please referring to FIG. 10, FIG. 10 is a schematic diagram of a communication method in an embodiment of the present disclosure. As shown in FIG. 10, the communication method includes the following steps.

S1001: a first network of a terminal device is an EPS, a LCS Client initiates an EPC-MT-LR deferred location process, and the LCS Client or an AF location request requires to provide location of the terminal device.

S1002: the terminal device moves from the first network EPS to a second network 5GS.

Here, during the network handover process, the network sends a H-GMLC (EPC-GMLC) address to the terminal device.

S1003: when the terminal device is single registered, the terminal device skips initiating process of cancelling LDR.

Similarly, if the first network is a 5GS and the second network is an EPS, if the terminal device is single registered, the terminal device skips initiating process of cancelling LDR.

That is to say, in the embodiment, the terminal device does not release the location context and skips cancelling the location request in a case where the terminal device moves between different networks.

S1004: the terminal device detects that a request is triggered or a periodic event occurs.

S1005: the terminal device sends an event report of an IWK network to an AMF.

Here, the event report of the IWK network includes event information and an EPC-GMLC address.

S1006: the AMF selects a LMF.

S1007: the AMF sends the event report of the IWK network to the LMF.

S1008: the LMF sends the event report of the IWK network to a 5GC-GMLC.

S1009: the 5GC-GMLC forwards the event report of the IWK network to an EPC-GMLC after receiving the event report of the IWK network.

S1010: the EPC-GMLC receives the LCS Client or the AF location request requiring to provide the location information of the terminal device in S1001, after receiving the event report of the IWK network, sends the request to the 5GC-GMLC requiring to provide the location information of the terminal device (such as a location parameter of the terminal device, such as positioning method and location accuracy).

S1011: a 5GC-MT-LR process.

Exemplarily, after receiving the request for the location information of the terminal device and mapping the location parameter of the terminal device, the 5GC-GMLC initiates the 5GC-MT-LR process.

That is to say, in the case where the terminal device moves from the first network to the second network and receives a first message (for example, requirement of providing the location information of the terminal device in S1010, which can be called as the first request), the terminal device initiates positioning of the terminal device, and obtains the location information, and sends the location information obtained by the positioning according to the first message.

In some embodiments, in order to distinguish the location parameters which are applicable to different networks, the location parameter which is applicable to the first network may be referred to as a first location parameter, and the location parameter which is applicable to the second network may be referred to as a second location parameter. Accordingly, imitating the positioning of the terminal device to obtain the location information may include: mapping the first location parameter to be the second location parameter which is applicable to the second network, and initiating a mobile terminated location request 5GC-MT-LR process according to the second location parameter to obtain the location information.

S1012: the 5GC-GMLC sends the received location information of the terminal device to the EPC-GMLC.

S1013: the EPC-GMLC sends the event report of the IWK network together with the location information of the terminal device to the LCS Client. Here, the LCS Client is oblivious to the IWK network.

Exemplarily, after the terminal device obtains the location information, it can add the location information to the event report of the IWK network.

In some embodiments, the event report of the IWK network includes an indication that the location information of the terminal device is requested and/or the location parameter of the terminal device.

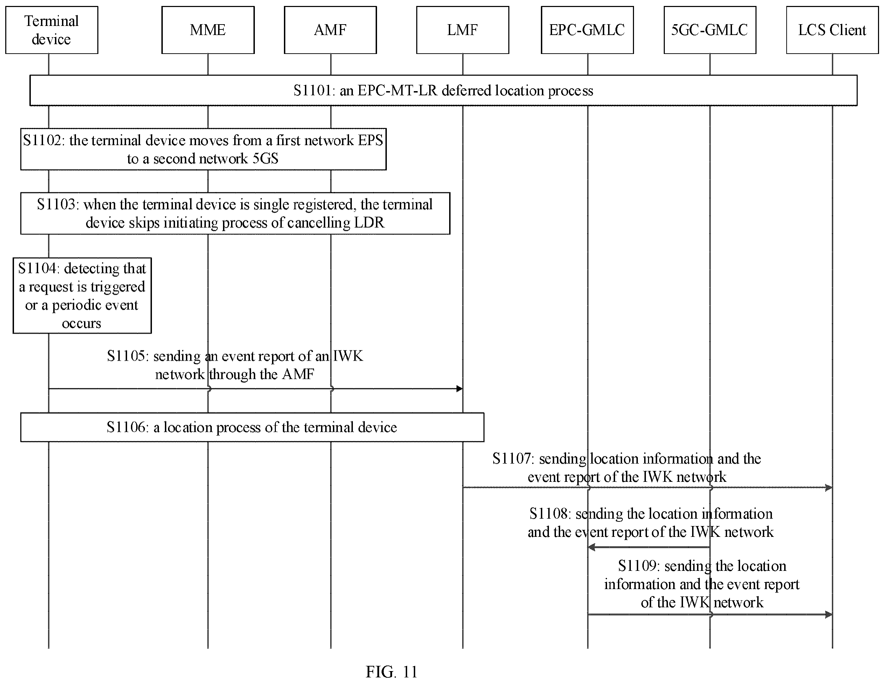

Please referring to FIG. 11, FIG. 11 is a schematic diagram of a communication method in another embodiment of the present disclosure. As shown in FIG. 11, the communication method includes the following steps.

S1101: an EPC-MT-LR deferred location process.

Exemplarily, a first network of a terminal device is an EPS, a LCS Client initiates an EPC-MT-LR deferred location process, and the LCS Client or an AF location request requires to provide the location information of the terminal device.

S1102: the terminal device moves from the first network EPS to a second network 5GS.

Here, during the network handover process, the network sends a H-GMLC (EPC-GMLC) address to the terminal device.

S1103: when the terminal device is single registered, the terminal device skips initiating process of cancelling LDR.

Similarly, if the first network is a 5GS and the second network is an EPS, if the terminal device is single registered, the terminal device skips initiating process of cancelling LDR.

S1104: the terminal device detects that a request is triggered or a periodic event occurs.

S1105: the terminal device sends an event report of an IWK network to a LMF through an AMF.

Here, the event report of the IWK network includes event information, the EPC-GMLC address, an indication that the location information of the terminal device is requested, and a location parameter of the terminal device.

That is to say, the first message can include either the first request or the indication that the location information of the terminal device is requested.

S1106: a location process of the terminal device.

Exemplarily, after receiving the event report of the IWK network, if the event report of the IWK network includes the indication that the location information of the terminal device is requested, the LMF maps the location parameter of the EPS terminal device to be the location parameter of the 5GS terminal device and initiates the location process of the terminal device.

S1107: the LMF sends the location information of the terminal device and the event report of the IWK network to the 5GC-GMLC.

In some embodiments, after the LMF receives the event report of the IWK network, it can send the event report of the IWK network to the 5GC-GMLC, and enable the 5GC-GMLC to initiate a MT-LR process.

S1108: the 5GC-GMLC forwards the location information of the terminal device and the event report of the IWK network to the EPC-GMLC.

S1109: the EPC-GMLC sends the location information of the terminal device and the event report of the IWK network to the LCS Client. Here, the LCS Client is oblivious to the IWK.

It should be understood that the above examples are merely illustrative of the possible implementations of the communication method of the embodiment and should not be construed as limiting the communication method of the embodiment. For example, the different technical features from the various examples may be combined to form new embodiments. Alternatively, at least some of the technical features in some embodiments may be adaptively adjusted or modified to obtain new embodiments, and so on. It will not be further described here.

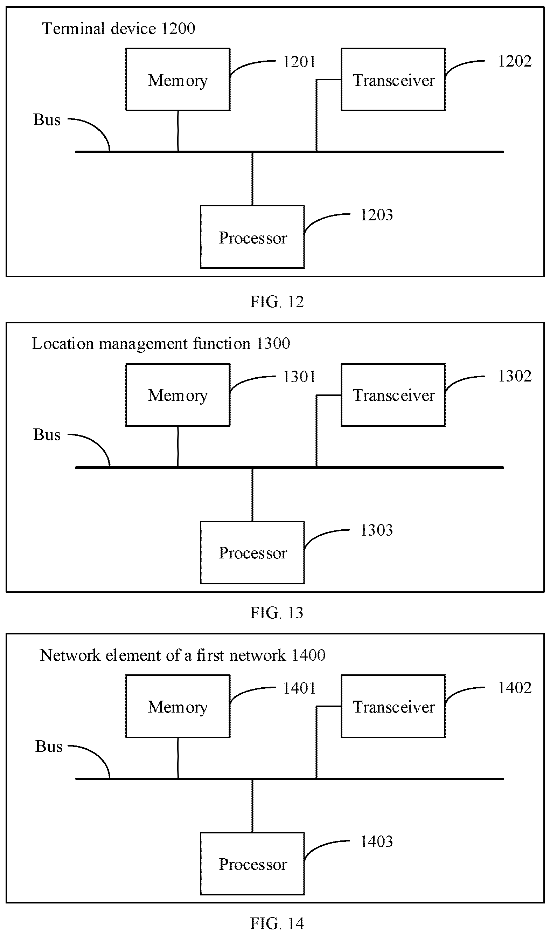

The present disclosure further provides a terminal device. As shown in FIG. 12, the terminal device 1200 includes a memory 1201, a transceiver 1202, and a processor 1203:
where the memory 1201 is configured to store a computer program; the transceiver 1202 is configured to send and receive data under a control of the processor; the processor 1203 is configured to read the computer program in the memory and perform the following operations:
in a case where the terminal device moves from a first network to a second network, not releasing, by the terminal device, a location context and skipping cancelling a location request.

In some embodiments, the processor 1203 is further configured to perform the following operations:
in a case where a process of the location request ends, or, in a case where an event reporting phase of an interworking IWK network corresponding to the location request ends, deleting the location context stored in the terminal device.

In some embodiments, the processor 1203 is further configured to perform the following operations:
in a case where the terminal device detects an event report of an interworking IWK network, initiating, by the terminal, a process of location request to obtain location information of the terminal device; and
adding the location information to the event report.

In some embodiments, the processor 1203 is further configured to perform the following operations:
sending an event report of an interworking IWK network;
where the event report includes at least one of the following: an indication that location information of the terminal device is requested, or a location parameter of the terminal device.

The present disclosure further provides a location management function, where the location management function LMF stores a location context of the terminal device. As shown in FIG. 13, the LMF 1300 includes a memory 1301, a transceiver 1302, and a processor 1303:
where the memory 1301 is configured to store a computer program; the transceiver 1302 is configured to send and receive data under a control of the processor; the processor 1303 is configured to read the computer program in the memory and perform the following operations:
processing the location context in a preset case, where the preset case includes at least one of the following:
   receiving a notification of an interworking IWK event;
   receiving an event report of an IWK network; or
   a waiting duration of the LMF reaching a preset duration.

In some embodiments, the processor 1303 processing the location context in the preset case specifically includes one of the following:
deleting or updating the location context in a case where the notification of the IWK event is received;
deleting the location context in a case where the notification of the IWK event is received and the waiting duration of the LMF reaches the preset duration;
deleting the location context in a case where the notification of the IWK event is received, the waiting duration of the LMF reaches the preset duration, and the event report is not received in the preset duration;
deleting the location context in a case where the waiting duration of the LMF reaches the preset duration; or
deleting or updating the location context in a case where the event report is received.

In some embodiments, the processor 1303 is further configured to perform the following operations:
receiving the IWK event notification sent by a gateway mobile location center GMLC of a second network;
receiving the IWK event notification sent by a unified data management UDM; or
receiving the event report sent by the gateway mobile location center GMLC of the second network.

In some embodiments, the processor is further configured to perform the following operations:
subscribing to the notification of the IWK event from the UDM.

The present disclosure further provides a network element of a first network. As shown in FIG. 14, the network element 1400 of the first network includes a memory 1401, a transceiver 1402, and a processor 1403:
where the memory 1401 is configured to store a computer program; the transceiver 1402 is configured to send and receive data under a control of the processor; the processor 1403 is configured to read the computer program in the memory and perform the following operations:
sending a gateway mobile location center GMLC address of the first network and a GMLC address of the second network to the terminal device.

In some embodiments, the processor 1403 sending the gateway mobile location center GMLC address of the first network and the GMLC address of the second network to the terminal device specifically includes:
sending the GMLC address of the first network and the GMLC address of the second network to the terminal device in a case where the terminal device has a IWK capability.

In some embodiments, the network element of the first network is a mobility management entity MME or an access and mobility management function AMF.

In some embodiments, the GMLC address of the first network and the GMLC address of the second network are queried and obtained by the MME or the AMF through a network repository function NRF; or,
the GMLC address of the first network and the GMLC address of the second network are obtained by the MME or the AMF from a GMLC of the second network.

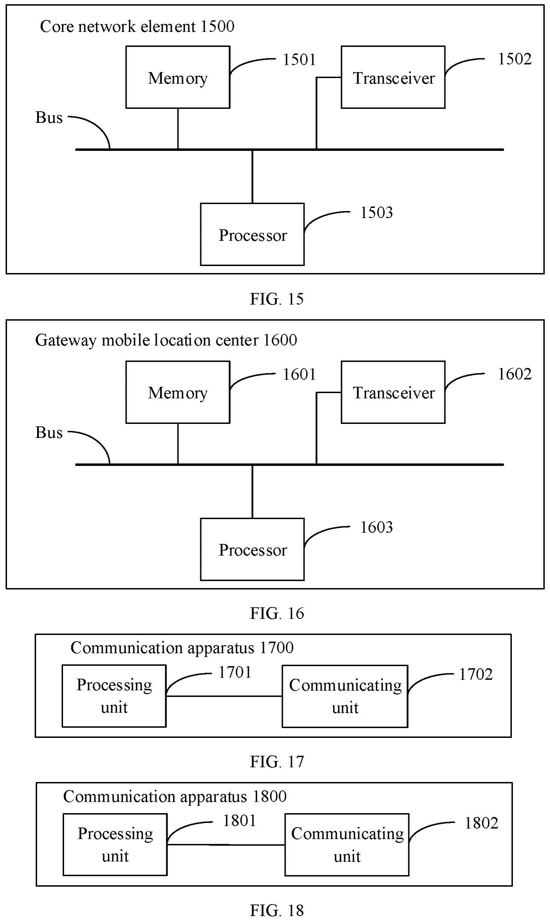

The present disclosure further provides a core network element. As shown in FIG. 15, the core network element 1500 includes a memory 1501, a transceiver 1502, and a processor 1503:
where the memory 1501 is configured to store a computer program; the transceiver 1502 is configured to send and receive data under a control of the processor; the processor 1503 is configured to read the computer program in the memory and perform the following operations:
in a case where a terminal device moves from a first network to a second network and receives a first message, initiating positioning of the terminal device to obtain location information, where the first message is used to request for obtaining the location information of the terminal device; and
sending the location information for the first message.

In some embodiments, the first message includes one of the following:
a first request requiring to provide the location information of the terminal device; or
an indication that the location information of the terminal device is requested in an event report of an interworking IWK network.

In some embodiments, the first message includes the first request, the core network element includes a gateway mobile location center GMLC of the second network, where the processor is further configured to perform the following operations:
receiving the first request sent by a GMLC of the first network.

In some embodiments, the first request includes a first location parameter which is applicable to the first network, where the processor 1503 initiating the positioning of the terminal device to obtain the location information specifically includes:
mapping the first location parameter to be a second location parameter which is applicable to the second network; and
initiating a mobile terminated location request MT-LR process according to the second location parameter to obtain the location information;
where the sending the location information for the first message, includes: sending the location information to the GMLC of the first network.

The present disclosure further provides a gateway mobile location center. As shown in FIG. 16, the gateway mobile location center 1600 includes a memory 1601, a transceiver 1602, and a processor 1603:
where the memory 1601 is configured to store a computer program; the transceiver 1602 is configured to send and receive data under a control of the processor; the processor 1603 is configured to read the computer program in the memory and perform the following operations:
in a case where an event report of an interworking IWK network is received, sending a first request requiring to provide location information of a terminal device; and
receiving the location information for the first message.

In some embodiments, the event report may include at least one of the following: an indication that the location information of the terminal device is requested, or a location parameter of the terminal device.

The present disclosure further provides a communication apparatus, applied to a terminal device, and as shown in FIG. 17, the communication apparatus 1700 includes:
a processing unit 1701, configured to, in a case where the terminal device moves from a first network to a second network, not release, by the terminal device, a location context and skip cancelling a location request.

In some embodiments, the processing unit 1701 is further configured to, in a case where a process of the location request ends, or, in a case where an event reporting phase of an interworking IWK network corresponding to the location request ends, delete the location context stored in the terminal device.

In some embodiments, the processing unit 1701 is further configured to, in a case where the terminal device detects an event report of an interworking IWK network, initiate, by the terminal, a process of location request to obtain location information of the terminal device, and add the location information to the event report.

A communicating unit 1702 is configured to send an event report of an interworking IWK network;
where the event report includes at least one of the following: an indication that location information of the terminal device is requested, or a location parameter of the terminal device.

The present disclosure further provides a communication apparatus, applied to a location management function LMF, where the LMF stores a location context of the terminal device, and as shown in FIG. 18, the communication apparatus 1800 includes:
a processing unit 1801, configured to process the location context in a preset case, where the preset case includes at least one of the following:
receiving a notification of an interworking IWK event;
receiving an event report of an IWK network; or
a waiting duration of the LMF reaching a preset duration.

In some embodiments, the processing unit 1801 is configured to perform one of the following:
deleting or updating the location context in a case where the notification of the IWK event is received;
deleting the location context in a case where the notification of the IWK event is received and the waiting duration of the LMF reaches the preset duration;
deleting the location context in a case where the notification of the IWK event is received, the waiting duration of the LMF reaches the preset duration, and the event report is not received in the preset duration;
deleting the location context in a case where the waiting duration of the LMF reaches the preset duration; or
deleting or updating the location context in a case where the event report is received.

A communicating unit 1802 is configured to perform one of the following:
receiving the IWK event notification sent by a gateway mobile location center GMLC of a second network;
receiving the IWK event notification sent by a unified data management UDM; or
receiving the event report sent by the gateway mobile location center GMLC of the second network.

In some embodiments, the communicating unit 1802 is further configured to subscribe to the notification of the IWK event from the UDM.

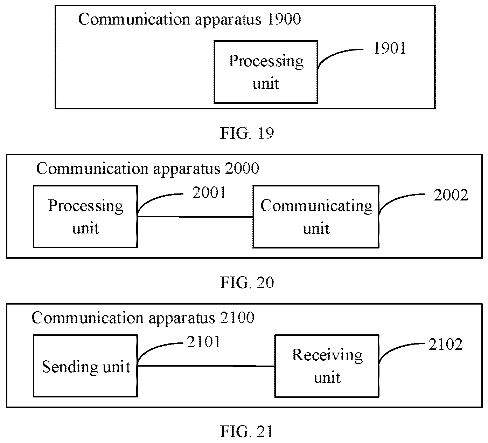

The present disclosure further provides a communication apparatus, applied to a network element of a first network, where a terminal device moves from the first network to a second network, and as shown in FIG. 19, the communication apparatus 1900 includes:
a communicating unit 1901, configured to send a gateway mobile location center GMLC address of the first network and a GMLC address of the second network to the terminal device.

In some embodiments, the communicating unit 1901 is configured to send the GMLC address of the first network and the GMLC address of the second network to the terminal device in a case where the terminal device has a IWK capability.

In some embodiments, the network element of the first network is a mobility management entity MME or an access and mobility management function AMF.

In some embodiments, the GMLC address of the first network and the GMLC address of the second network are queried and obtained by the MME or the AMF through a network repository function NRF; or,
the GMLC address of the first network and the GMLC address of the second network are obtained by the MME or the AMF from a GMLC of the second network.

The present disclosure further provides a communication apparatus, applied to a core network element, and as shown in FIG. 20, the communication apparatus 2000 includes:
a processing unit 2001, configured to, in a case where a terminal device moves from a first network to a second network and receives a first message, initiate positioning of the terminal device to obtain location information, where the first message is used to request for obtaining the location information of the terminal device; and
a communicating unit 2002, configured to send the location information for the first message.

In some embodiments, the first message includes one of the following:
a first request requiring to provide the location information of the terminal device; or
an indication that the location information of the terminal device is requested in an event report of an interworking IWK network.

In some embodiments, the first message includes the first request, the core network element includes a gateway mobile location center GMLC of the second network, where the communicating unit is further configured to receive the first request sent by a GMLC of the first network.

In some embodiments, the first request includes a first location parameter which is applicable to the first network, where the processing unit 2001 is specifically configured to map the first location parameter to be a second location parameter which is applicable to the second network, and initiate a mobile terminated location request MT-LR process according to the second location parameter to obtain the location information;
where the sending the location information for the first message includes: sending the location information to the GMLC of the first network.

The present disclosure provides a communication apparatus, applied to gateway mobile location center GMLC, and as shown in FIG. 21, the communication apparatus 2100 includes:
a sending unit 2101, configured to, in a case where an event report of an interworking IWK network is received, send a first request requiring to provide location information of a terminal device; and
a receiving unit 2102, configured to receive the location information for the first message.

In some embodiments, the event report may include at least one of the following: an indication that the location information of the terminal device is requested, or a location parameter of the terminal device.

It should be noted here that the aforementioned apparatuses provided by the disclosure can achieve all the method steps implemented in the above-mentioned method embodiments, and can achieve the same technical effects. Therefore, the same parts and beneficial effects in the embodiments that are the same as those in the method embodiments will not be specifically described here.

In addition, the division of units in the embodiments of the present disclosure is as an example and is merely a logical function division. In actual implementation, there may be other division methods. In addition, each functional unit in various embodiments of the present disclosure may be integrated into one processing unit, or each unit may exist physically alone, or two or more units may be integrated into one unit. The above integrated units can be implemented in the form of hardware or in the form of software functional units.

When the integrated unit is implemented in the form of a software functional unit and sold or used as an independent product, the integrated unit may be stored in a processor readable storage medium. Based on such an understanding, the technical solutions of the present disclosure essentially or the part that contributes to the prior art or all or a part of the technical solutions may be implemented in the form of a software product. The computer software product is stored in a storage medium and includes several instructions for instructing a computer device (which may be a personal computer, a server, a network device, or the like) or a processor (processor) to perform all or some steps of the methods described in the embodiments of the present disclosure. The foregoing storage medium includes any medium that can store a program code, such as a USB flash drive, a removable hard disk, a read-only memory (Read-Only Memory, ROM), a random access memory (Random Access Memory, RAM), a magnetic disk, or an optical disk, etc.

The present disclosure further provides a processor-readable storage medium. The processor-readable storage medium stores a computer program, and the computer program is used to cause the processor to execute any communication method provided by the embodiments of the present disclosure.

Here, the processor-readable storage medium may be any available medium or data storage device that the processor can access, including but not limited to a magnetic memory (such as a floppy disk, a hard disk, a tape, a magneto-optical disk (MO), etc.), an optical memory (such as a CD, a DVD, a BD, a HVD, etc.), and a semiconductor memory (such as a ROM, an EPROM, an EEPROM, a non-volatile memory (NAND FLASH), a solid state drive (SSD)), etc.

The present disclosure further provides a computer program product including instructions which, when run by a computer, cause the computer to implement any communication method provided by the embodiments of the present disclosure.

The present disclosure further provides an electronic device, including: a processor and a memory connected with the processor for communication;
where the memory stores computer-executable instructions;
the processor executes the memory-stored computer-executable instructions to implement any communication method provided by the embodiments of the present disclosure.

Those skilled in the art will appreciate that embodiments of the present disclosure may be provided as methods, systems, or computer program products. Accordingly, the present disclosure may take the form of an entirely hardware embodiment, an entirely software embodiment, or an embodiment that combines software and hardware aspects. Furthermore, the present disclosure may take the form of a computer program product embodied in one or more computer-usable storage media (including, but not limited to, a magnetic disk memory, an optical memory, and the like) having a computer-usable program code embodied therein.

The present disclosure is described with reference to flow charts and/or block diagrams of the methods, the apparatus, and the computer program products according to the embodiments of the present disclosure. It will be understood that each process and/or block in the flow charts and/or block diagrams, and combinations of processes and/or blocks in the flow charts and/or block diagrams, can be implemented by computer-executable instructions. These computer-executable instructions may be provided to a processor of a general-purpose computer, a special-purpose computer, an embedded processor, or other programmable data processing device to produce a machine, such that the instructions executed by the processor of the computer or other programmable data processing device produce means for implementing the functions specified in a process or multiple processes in the flow chart and/or in a block or multiple blocks in the block diagram.

These processor-executable instructions may also be stored in a processor-readable memory that causes a computer or other programmable data processing device to operate in a particular manner, such that instructions stored in the processor-readable memory generates a manufactured product including an instruction means. The instruction means implements the function specified in one process or multiple processes in the flow chart and/or one block or multiple blocks in the block diagram.

These processor-executable instructions may also be loaded into a computer or other programmable data processing devices, causing a series of operational steps to be performed in the computer or other programmable devices to produce computer-implemented processing, thereby causing the instructions that are executed in the computer or other programmable devices to provide steps for implementing the functions specified in a process or multiple processes of the flow charts and/or a block or multiple blocks of the block diagrams.

Obviously, those skilled in the art can make various changes and modifications to the present disclosure without departing from the spirit and scope of the present disclosure. In this way, if these changes and modifications of the present disclosure fall within the scope of the claims and equivalent technologies thereof of the present disclosure, the present disclosure is also intended to include these changes and modifications.

## Claims

1. A communication method, applied to a terminal device and comprising:
in a case where the terminal device moves from a first network to a second network, not releasing, by the terminal device, a location context.

2. The method according to claim 1, further comprising:
in a case where a process of location request ends, or, in a case where an event reporting phase of an interworking IWK network corresponding to the location request ends, deleting the location context stored in the terminal device.

3. The method according to claim 1, further comprising:
in a case where the terminal device detects an event report of an interworking IWK network, initiating, by the terminal, a process of location request to obtain location information of the terminal device; and
adding the location information to the event report.

4. The method according to claim 1 or 3, further comprising:
sending an event report of an interworking IWK network;
wherein the event report comprises at least one of the following: an indication that location information of the terminal device is requested, or a location parameter of the terminal device.

5. A communication method, applied to a location management function LMF, wherein the LMF stores a location context of a terminal device, and the method comprises:
processing the location context in a preset case, wherein the preset case comprises at least one of the following:
receiving a notification of an interworking IWK event;
receiving an event report of an IWK network; or
a waiting duration of the LMF reaching a preset duration.

6. The method according to claim 5, wherein the processing the location context in the preset case comprises one of the following:
deleting or updating the location context in a case where the notification of the IWK event is received;
deleting the location context in a case where the notification of the IWK event is received and the waiting duration of the LMF reaches the preset duration;
deleting the location context in a case where the notification of the IWK event is received, the waiting duration of the LMF reaches the preset duration, and the event report is not received in the preset duration;
deleting the location context in a case where the waiting duration of the LMF reaches the preset duration; or
deleting or updating the location context in a case where the event report is received.

7. The method according to claim 5 or 6, further comprising one of the following:
receiving the IWK event notification sent by a gateway mobile location center GMLC of a second network;
receiving the IWK event notification sent by a unified data management UDM; or
receiving the event report sent by the gateway mobile location center GMLC of the second network.

8. The method according to claim 7, before the receiving the IWK event notification sent by the unified data management UDM, further comprising:
subscribing to the notification of the IWK event from the UDM.

9. A communication method, applied to a network element of a first network, wherein a terminal device moves from the first network to a second network, and the method comprises:
sending a gateway mobile location center GMLC address of the first network and a GMLC address of the second network to the terminal device.

10. The method according to claim 9, wherein the sending the gateway mobile location center GMLC address of the first network and the GMLC address of the second network to the terminal device comprises:
sending the GMLC address of the first network and the GMLC address of the second network to the terminal device in a case where the terminal device has a IWK capability.

11. The method according to claim 9 or 10, wherein the network element of the first network is a mobility management entity MME or an access and mobility management function AMF.

12. The method according to claim 11, wherein the GMLC address of the first network and the GMLC address of the second network are queried and obtained by the MME or the AMF through a network repository function NRF; or,
the GMLC address of the first network and the GMLC address of the second network are obtained by the MME or the AMF from a GMLC of the second network.

13. A communication method, applied to a core network element and comprising:
in a case where a terminal device moves from a first network to a second network and receives a first message, initiating positioning of the terminal device to obtain location information, wherein the first message is used to request for obtaining the location information of the terminal device; and
sending the location information for the first message.

14. The method according to claim 13, wherein the first message comprises one of the following:
a first request requiring to provide the location information of the terminal device; or
an indication that the location information of the terminal device is requested in an event report of an interworking IWK network.

15. The method according to claim 14, wherein the first message comprises the first request, the core network element comprises a gateway mobile location center GMLC of the second network, wherein before the initiating the positioning of the terminal device, the method further comprises:
receiving the first request sent by a GMLC of the first network.

16. The method according to claim 15, wherein the first request comprises a first location parameter which is applicable to the first network, wherein the initiating the positioning of the terminal device to obtain the location information comprises:
mapping the first location parameter to be a second location parameter which is applicable to the second network; and
initiating a mobile terminated location request MT-LR process according to the second location parameter to obtain the location information;
wherein the sending the location information for the first message comprises: sending the location information to the GMLC of the first network.

17. A communication method, applied to a gateway mobile location center GMLC and comprising:
in a case where an event report of an interworking IWK network is received, sending a first request requiring to provide location information of a terminal device; and
receiving the location information for the first message.

18. The method according to claim 17, wherein the event report may comprise at least one of the following: an indication that the location information of the terminal device is requested, or a location parameter of the terminal device.

19. The method according to claim 17 or 18, wherein the first request comprises a first location parameter which is applicable to a first network, and the method further comprises:
if the GMLC is a GMLC of the first network, mapping the first location parameter to be a second location parameter which is applicable to a second network;
wherein the first request carries the second location parameter which is applicable to the second network.

20. A terminal device, comprising a memory, a transceiver, and a processor:
wherein the memory is configured to store a computer program; the transceiver is configured to send and receive data under a control of the processor; the processor is configured to read the computer program in the memory and perform the following operations:
in a case where the terminal device moves from a first network to a second network, not releasing, by the terminal device, a location context.

21. The terminal device according to claim 20, wherein the processor is further configured to perform the following operations:
in a case where a process of location request ends, or, in a case where an event reporting phase of an interworking IWK network corresponding to the location request ends, deleting the location context stored in the terminal device.

22. The terminal device according to claim 20, wherein the processor is further configured to perform the following operations:
in a case where the terminal device detects an event report of an interworking IWK network, initiating, by the terminal, a process of location request to obtain location information of the terminal device; and
adding the location information to the event report.

23. The terminal device according to claim 20 or 22, wherein the processor is further configured to perform the following operations:
sending an event report of an interworking IWK network;
wherein the event report comprises at least one of the following: an indication that location information of the terminal device is requested, or a location parameter of the terminal device.

24. A location management function, wherein the location management function LMF stores a location context of a terminal device, and the LMF comprises a memory, a transceiver, and a processor:
wherein the memory is configured to store a computer program; the transceiver is configured to send and receive data under a control of the processor; the processor is configured to read the computer program in the memory and perform the following operations:
processing the location context in a preset case, wherein the preset case comprises at least one of the following:
receiving a notification of an interworking IWK event;
receiving an event report of an IWK network; or
a waiting duration of the LMF reaching a preset duration.

25. The location management function according to claim 24, wherein the processor processing the location context in the preset case specifically comprises one of the following:
deleting or updating the location context in a case where the notification of the IWK event is received;
deleting the location context in a case where the notification of the IWK event is received and the waiting duration of the LMF reaches the preset duration;
deleting the location context in a case where the notification of the IWK event is received, the waiting duration of the LMF reaches the preset duration, and the event report is not received in the preset duration;
deleting the location context in a case where the waiting duration of the LMF reaches the preset duration; or
deleting or updating the location context in a case where the event report is received.

26. The location management function according to claim 24 or 25, wherein the processor is further configured to perform the following operations:
receiving the IWK event notification sent by a gateway mobile location center GMLC of a second network;
receiving the IWK event notification sent by a unified data management UDM; or
receiving the event report sent by the gateway mobile location center GMLC of the second network.

27. The location management function according to claim 26, wherein the processor is further configured to perform the following operations:
subscribing to the notification of the IWK event from the UDM.

28. A network element of a first network, wherein a terminal device moves from the first network to a second network, and the network element of the first network comprises a memory, a transceiver, and a processor:
wherein the memory is configured to store a computer program; the transceiver is configured to send and receive data under a control of the processor; the processor is configured to read the computer program in the memory and perform the following operations:
sending a gateway mobile location center GMLC address of the first network and a GMLC address of the second network to the terminal device.

29. The network element of the first network according to claim 28, wherein the processor sending the gateway mobile location center GMLC address of the first network and the GMLC address of the second network to the terminal device specifically comprises:
sending the GMLC address of the first network and the GMLC address of the second network to the terminal device in a case where the terminal device has a IWK capability.

30. The network element of the first network according to claim 28 or 29, wherein the network element of the first network is a mobility management entity MME or an access and mobility management function AMF.

31. The network element of the first network according to claim 30, wherein the GMLC address of the first network and the GMLC address of the second network are queried and obtained by the MME or the AMF through a network repository function NRF; or,
the GMLC address of the first network and the GMLC address of the second network are obtained by the MME or the AMF from a GMLC of the second network.

32. A core network element, comprising a memory, a transceiver, and a processor:
wherein the memory is configured to store a computer program; the transceiver is configured to send and receive data under a control of the processor; the processor is configured to read the computer program in the memory and perform the following operations:
in a case where a terminal device moves from a first network to a second network and receives a first message, initiating positioning of the terminal device to obtain location information, wherein the first message is used to request for obtaining the location information of the terminal device; and
sending the location information for the first message.

33. The core network element according to claim 32, wherein the first message comprises one of the following:
a first request requiring to provide the location information of the terminal device; or
an indication that the location information of the terminal device is requested in an event report of an interworking IWK network.

34. The core network element according to claim 33, wherein the first message comprises the first request, the core network element comprises a gateway mobile location center GMLC of the second network, wherein the processor is further configured to perform the following operations:
receiving the first request sent by a GMLC of the first network.

35. The core network element according to claim 34, wherein the first request comprises a first location parameter which is applicable to the first network, wherein the processor initiating the positioning of the terminal device to obtain the location information specifically comprises:
mapping the first location parameter to be a second location parameter which is applicable to the second network; and
initiating a mobile terminated location request MT-LR process according to the second location parameter to obtain the location information;
wherein the sending the location information for the first message comprises: sending the location information to the GMLC of the first network.

36. A gateway mobile location center, comprising a memory, a transceiver, and a processor:
wherein the memory is configured to store a computer program; the transceiver is configured to send and receive data under a control of the processor; the processor is configured to read the computer program in the memory and perform the following operations:
in a case where an event report of an interworking IWK network is received, sending a first request requiring to provide location information of a terminal device; and
receiving the location information for the first message.

37. The gateway mobile location center according to claim 36, wherein the event report may comprise at least one of the following: an indication that the location information of the terminal device is requested, or a location parameter of the terminal device.

38. The gateway mobile location center according to claim 36 or 37, wherein the first request comprises a first location parameter which is applicable to a first network, and the processor is further configured to perform the following operations:
if the gateway mobile location center is a GMLC of the first network, mapping the first location parameter to be a second location parameter which is applicable to a second network;
wherein the first request carries the second location parameter which is applicable to the second network.

39. A communication apparatus, applied to a terminal device and comprising:
a processing unit, configured to, in a case where the terminal device moves from a first network to a second network, not release, by the terminal device, a location context.

40. The apparatus according to claim 39, wherein the processing unit is further configured to, in a case where a process of location request ends, or, in a case where an event reporting phase of an interworking IWK network corresponding to the location request ends, delete the location context stored in the terminal device.

41. The apparatus according to claim 39, wherein the processing unit is further configured to, in a case where the terminal device detects an event report of an interworking IWK network, initiate, by the terminal, a process of location request to obtain location information of the terminal device, and add the location information to the event report.

42. The apparatus according to claim 39 or 41, further comprising:
a communicating unit, configured to send an event report of an interworking IWK network;
wherein the event report comprises at least one of the following: an indication that location information of the terminal device is requested, or a location parameter of the terminal device.

43. A communication apparatus, applied to a location management function LMF, wherein the LMF stores a location context of a terminal device, and the apparatus comprises:
a processing unit, configured to process the location context in a preset case, wherein the preset case comprises at least one of the following:
receiving a notification of an interworking IWK event;
receiving an event report of an IWK network; or
a waiting duration of the LMF reaching a preset duration.

44. The apparatus according to claim 43, wherein the processing unit is configured to perform one of the following:
deleting or updating the location context in a case where the notification of the IWK event is received;
deleting the location context in a case where the notification of the IWK event is received and the waiting duration of the LMF reaches the preset duration;
deleting the location context in a case where the notification of the IWK event is received, the waiting duration of the LMF reaches the preset duration, and the event report is not received in the preset duration;
deleting the location context in a case where the waiting duration of the LMF reaches the preset duration; or
deleting or updating the location context in a case where the event report is received.

45. The apparatus according to claim 43 or 44, further comprising: a communicating unit, configured to perform one of the following:
receiving the IWK event notification sent by a gateway mobile location center GMLC of a second network;
receiving the IWK event notification sent by a unified data management UDM; or
receiving the event report sent by the gateway mobile location center GMLC of the second network.

46. The apparatus according to claim 45, wherein the communicating unit is further configured to subscribe to the notification of the IWK event from the UDM.

47. A communication apparatus, applied to a network element of a first network, wherein a terminal device moves from the first network to a second network, and the apparatus comprises:
a communicating unit, configured to send a gateway mobile location center GMLC address of the first network and a GMLC address of the second network to the terminal device.

48. The apparatus according to claim 47, wherein the communicating unit is configured to send the GMLC address of the first network and the GMLC address of the second network to the terminal device in a case where the terminal device has a IWK capability.

49. The apparatus according to claim 47 or 48, wherein the network element of the first network is a mobility management entity MME or an access and mobility management function AMF.

50. The apparatus according to claim 49, wherein the GMLC address of the first network and the GMLC address of the second network are queried and obtained by the MME or the AMF through a network repository function NRF; or,
the GMLC address of the first network and the GMLC address of the second network are obtained by the MME or the AMF from a GMLC of the second network.

51. A communication apparatus, applied to a core network element and comprising:
a processing unit, configured to, in a case where a terminal device moves from a first network to a second network and receives a first message, initiate positioning of the terminal device to obtain location information, wherein the first message is used to request for obtaining the location information of the terminal device; and
a communicating unit, configured to send the location information for the first message.

52. The apparatus according to claim 51, wherein the first message comprises one of the following:
a first request requiring to provide the location information of the terminal device; or
an indication that the location information of the terminal device is requested in an event report of an interworking IWK network.

53. The apparatus according to claim 52, wherein the first message comprises the first request, the core network element comprises a gateway mobile location center GMLC of the second network, wherein the communicating unit is further configured to receive the first request sent by a GMLC of the first network.

54. The apparatus according to claim 53, wherein the first request comprises a first location parameter which is applicable to the first network, wherein the processing unit is specifically configured to map the first location parameter to be a second location parameter which is applicable to the second network, and initiate a mobile terminated location request MT-LR process according to the second location parameter to obtain the location information;
wherein the sending the location information for the first message comprises: sending the location information to the GMLC of the first network.

55. A communication apparatus, applied to a gateway mobile location center GMLC and comprising:
a sending unit, configured to, in a case where an event report of an interworking IWK network is received, send a first request requiring to provide location information of a terminal device; and
a receiving unit, configured to receive the location information for the first message.

56. The apparatus according to claim 55, wherein the event report may comprise at least one of the following: an indication that the location information of the terminal device is requested, or a location parameter of the terminal device.

57. The apparatus according to claim 55 or 56, wherein the first request comprises a first location parameter which is applicable to a first network, and the apparatus is further configured to:
if the GMLC is a GMLC of the first network, map the first location parameter to be a second location parameter which is applicable to a second network;
wherein the first request carries the second location parameter which is applicable to the second network.

58. A processor-readable storage medium, wherein the processor-readable storage medium stores a computer program, and the computer program is used to cause the processor to execute the method according to any one of claims 1 to 4; or, the processor to execute the method according to any one of claims 5 to 8; or, the processor to execute the method according to any one of claims 9 to 12; or, the processor to execute the method according to any one of claims 13 to 16; or, the processor to execute the method according to any one of claims 17 to 19.
